# EUROPEAN PATENT APPLICATION

(11) **EP 4 625 130 A1**
(43) Date of publication of application: **01.10.2025**
(21) Application number: 23909796.7
(22) Date of filing: 22.11.2023
(51) Int. Cl.: G06F 3/06

(54) **METHOD FOR ADJUSTING PROGRAM STORAGE POSITION, AND RELATED APPARATUS**

(30) Priority: 30.12.2022 CN 202211738156
(71) Applicant: Huawei Technologies Co., Ltd., Shenzhen, Guangdong 518129 (CN)
(72) Inventor: CHEN, Jiliang, Shenzhen, Guangdong 518129 (CN); TANG, Kaixuan, Shenzhen, Guangdong 518129 (CN); DAI, Lei, Shenzhen, Guangdong 518129 (CN); YAO, Xianqing, Shenzhen, Guangdong 518129 (CN); QIU, Penghui, Shenzhen, Guangdong 518129 (CN)
(74) Representative: Gill Jennings & Every LLP
(86) International application number: PCT/CN2023/133258
(87) International publication number: WO 2024/139864

(57) **Abstract**

This application discloses a method for adjusting a program storage location and a related apparatus. In the method, before executing a service scenario, a computer device may preliminarily adjust a location of a function/variable in a storage area based on a predicted service scenario, and/or dynamically adjust locations of these functions in the storage area based on a call status of the functions in a process of executing an application service. A function/variable with a relatively high call frequency may be adjusted to a high-speed storage area, and a function/variable with a relatively low call frequency may be adjusted to a low-speed storage area; or these functions/variables are stored in the storage area according to a location order based on values of call frequencies. In this way, it can be ensured that the function/variable with the relatively high call frequency can be read more quickly, thereby improving access efficiency, improving utilization of the high-speed storage area, and improving service execution efficiency. Therefore, a location of a function/variable in a storage area can be adjusted based on a service scenario.

## Description

This application claims priority to Chinese Patent Application No. 202211738156.0, filed with the China National Intellectual Property Administration on December 30, 2022 and entitled "METHOD FOR ADJUSTING PROGRAM STORAGE LOCATION AND RELATED APPARATUS", which is incorporated herein by reference in its entirety.

### TECHNICAL FIELD

This application relates to the field of computer technologies, and in particular, to a method for adjusting a program storage location and a related apparatus.

### BACKGROUND

As a manufacturing process approaches a physical limit, a hierarchical memory architecture is widely used. A hierarchical memory is a hardware memory architecture model, and indicates a plurality of memory blocks that can be accessed by using addresses and that have different access rates on a system-level chip. Common hierarchical memory architectures include: cache (cache) + static random access memory (Static random access memory, SRAM) + double data rate synchronous dynamic random access memory (Double Data Rate Synchronous Dynamic Random Access Memory, DDR), cache + DDR + non-volatile memory (Non-volatile memory, NVM), cache + DDR, and the like. Cache + SRAM + DDR is used as an example. Access rates of the cache, the SRAM, and the DDR are in descending order. A function or a variable that needs to be frequently accessed in a running process of an electronic device may be stored in the SRAM, and a function or a variable that is seldom accessed may be stored in the DDR, to improve access efficiency and increase a running speed of the electronic device.

However, how to determine the function or the variable that is frequently accessed and the function or the variable that is seldom accessed and implement appropriate arrangement of a storage location of a function or a variable is an urgent problem to be resolved currently.

### SUMMARY

This application provides a method for adjusting a program storage location and a related apparatus, to adjust a location of a function/variable in a storage area based on a service scenario.

According to a first aspect, an embodiment of this application provides a method for adjusting a program storage location. The method includes: determining a first service scenario; adjusting a storage location of a first to-be-adjusted object to a first location, and adjusting a storage location of a second to-be-adjusted object to a second location, where the first to-be-adjusted object and the second to-be-adjusted object are respectively a first function and a second function that are called in the first service scenario, or the first to-be-adjusted object and the second to-be-adjusted object are respectively a first variable and a second variable that are called in the first service scenario; and in the first service scenario, a call frequency of the first to-be-adjusted object is higher than a call frequency of the second to-be-adjusted object, the first location and the second location are in a storage area of a computer device, and an address of the first location is less than an address of the second location or an access rate of the first location is higher than an access rate of the second location; and executing the first service scenario.

According to the method provided in the first aspect, before a service scenario is executed, a specific service scenario that may be executed may be determined in advance, and a location of a function/variable that needs to be called in a process of executing the service scenario is adjusted based on the service scenario. In other words, the function/variable is semi-statically adjusted, so that a function/variable with a higher call frequency in the service scenario can be called more quickly. This can arrange storage locations of functions/variables based on the service scenario without storing them according to a fixed location arrangement order. The computer device can adjust storage locations of the functions/variables one by one, thereby implementing function/variable adjustment at a finer granularity in a program, improving access efficiency, and speeding up execution of the service scenario.

With reference to the first aspect, in an implementation, the method further includes: obtaining call frequencies of a third function and a fourth function, where the third function and the fourth function are functions that are called after execution of the first service scenario starts, and the call frequency of the third function is higher than the call frequency of the fourth function; and adjusting a storage location of the third function to a third location, and adjusting a storage location of the fourth function to a fourth location, where the third location and the fourth location are in the storage area of the computer device, and an address of the third location is less than an address of the fourth location or an access rate of the third location is higher than an access rate of the fourth location.

After execution of the service scenario starts, a real-time change of the service scenario may also exist, which causes a change to a call status of the function. Therefore, in addition to the location of the function being called before execution of the service scenario, a location of the function in a storage area may be dynamically adjusted based on the call status of the function in a process of executing the service scenario, that is, the function is dynamically adjusted. In this way, it can be ensured as much as possible that a function with a relatively high call frequency can be read more quickly in the process of executing the service scenario, thereby further improving access efficiency and further improving execution efficiency of the service scenario.

According to a second aspect, an embodiment of this application provides a method for adjusting a program storage location. The method includes: executing a first service scenario; obtaining call frequencies of a third function and a fourth function, where the third function and the fourth function are functions that are called after execution of the first service scenario starts, and the call frequency of the third function is higher than the call frequency of the fourth function; and adjusting a storage location of the third function to a third location, and adjusting a storage location of the fourth function to a fourth location, where the third location and the fourth location are in a storage area of a computer device, and an address of the third location is less than an address of the fourth location or an access rate of the third location is higher than an access rate of the fourth location.

According to the method provided in the second aspect, in a process of executing a service scenario, a location of a function in a storage area is dynamically adjusted based on a change status of the service scenario, so that a function with a relatively high call frequency can be read more quickly in the process of executing the service scenario. In this way, the computer device dynamically adjusts each function in a system based on a dynamically changing service scenario, thereby speeding up execution of the service by the computer device and speeding up execution of various service scenarios. In addition, the computer device may adjust storage locations of functions function by function, thereby implementing function adjustment at a finer granularity in a program and improving performance of the computer device.

With reference to the second aspect, in an implementation, before the executing the first service scenario, the method further includes: adjusting a storage location of a first to-be-adjusted object to a first location, and adjusting a storage location of a second to-be-adjusted object to a second location, where the first to-be-adjusted object and the second to-be-adjusted object are respectively a first function and a second function that are called in the first service scenario, or the first to-be-adjusted object and the second to-be-adjusted object are respectively a first variable and a second variable that are called in the first service scenario; the first service scenario is a service scenario of a first service or a first application; and in any service scenario of the first service or the first application, a probability that a call frequency of the first to-be-adjusted object is higher than a call frequency of the second to-be-adjusted object is greater than a threshold, the first location and the second location are in the storage area of the computer device, and an address of the first location is less than an address of the second location or an access rate of the first location is higher than an access rate of the second location.

In other words, the location of the function in the storage area is dynamically adjusted in the process of executing the service scenario, locations of some functions/variables in the storage area may be further adjusted in advance before execution of the service scenario.

In an implementation, a relative call frequency between some functions/variables that are adjusted before execution of the service scenario does not greatly change in any service scenario of a service or an application. For example, for a function 1 and a function 2, during execution of any service scenario of an application, a call frequency of the function 1 is higher than a call frequency of the function 2. In this case, a relative call frequency between the function 1 and the function 2 is relatively stable, and the computer device may adjust locations of the function 1 and the function 2 in advance before the application runs. Therefore, when the computer device initially executes the service scenario, the computer device can read a function with a relatively high call frequency in a storage area with a relatively high access rate; or read a function with a relatively high call frequency in a location with a relatively small address in a storage area, and read a function with a relatively low call frequency in a storage area with a relatively low access rate; or read a function with a relatively low call frequency in a location with a relatively large address in a storage area. In this way, it can be ensured that a function/variable with a higher call frequency in a running process of a service or an application can be read more quickly, and the computer device can allocate a storage area with a relatively high access rate or a relatively forward storage location in a storage area to a function/variable that is relatively frequently called.

In another implementation, before running a service or an application, the computer device may predetermine a service scenario in which the service or the application runs, and adjust, based on the service scenario, a location of a function/variable that needs to be called in a process of running the application, so that a function/variable with a relatively high call frequency in the service scenario can be called more quickly. The computer device can arrange storage locations of functions/variables based on the service scenario without storing them according to a fixed function/variable arrangement order, thereby increasing a running speed of the computer device when the computer device just starts to run the application.

With reference to the first aspect and the second aspect, in an implementation, the adjusting the storage location of the first to-be-adjusted object to the first location, and adjusting the storage location of the second to-be-adjusted object to the second location specifically includes: based on a configuration file, adjusting the storage location of the first to-be-adjusted object to the first location, and adjusting the storage location of the second to-be-adjusted object to the second location, where the configuration file indicates the adjusted locations of the first to-be-adjusted object and the second to-be-adjusted object, and the configuration file is determined based on the call frequencies of the first to-be-adjusted object and the second to-be-adjusted object in a process of executing the first service scenario.

In other words, before execution of the service scenario, how to semi-statically adjust the storage location of the function/variable may be determined by using the configuration file. The configuration file may be determined in advance based on a call status of the function/variable in the process of executing the service scenario. In this way, the storage location of the function/variable does not need to be adjusted after execution of the service scenario. Therefore, when the service scenario starts, the function/variable can be in the storage location that satisfies the service scenario as much as possible.

With reference to the first aspect and the second aspect, in an implementation, the first service scenario is a service scenario included in at least one of 2G, 3G, 4G, and 5G services.

With reference to the first aspect and the second aspect, in an implementation, the first service scenario is the service scenario of the first service or the first application, and the first to-be-adjusted object, the second to-be-adjusted object, the third function, and the fourth function may satisfy any one of the following conditions:
(1) Differences between call frequencies of the first to-be-adjusted object and the second to-be-adjusted object in any other service scenario of the first service or the first application, and the call frequencies in the first service scenario are less than a first value.

In other words, a to be semi-statically adjusted function/variable is a function/variable whose call frequency does not change greatly in another service scenario compared with a pre-determined service scenario. For example, the function 1 has a relatively high call frequency in a scenario 1, and still has a relatively high call frequency in another service scenario. Therefore, locations of these functions/variables can be directly arranged in advance before the application runs, and do not need to be dynamically adjusted in the running process of the service or the application, thereby reducing a quantity of to be dynamically adjusted functions/variables.

Differences between call frequencies of the third function and the fourth function in another service scenario of the first service or the first application, and the call frequencies in the first service scenario are greater than a second value.

In other words, in a running process of a service or an application, a to be dynamically adjusted function is a function whose call frequency changes greatly in another service scenario compared with a pre-determined service scenario. For example, the function 1 has a relatively high call frequency in the scenario 1, has a relatively low call frequency in a scenario 2, and has a much lower call frequency in a scenario 3. That is, a difference between a call frequency of the function 1 in a service scenario other than the scenario 1 and the call frequency in the scenario 1 is relatively large. In this case, in the running process of the service or the application, by monitoring call statuses of these functions, locations of these functions may be dynamically adjusted, to ensure as much as possible that even if the service scenario changes in the running process of the application, a function with a high call frequency is still stored in a storage area with a relatively high access rate, or a function with a relatively high call frequency is still stored in a location with a relatively small address in a storage area. In this way, in the running process of the application, only the call statuses of these functions needed by the service or the application need to be monitored, thereby reducing a workload of the computer device and increasing a dynamic adjustment speed.

(2) Differences between call frequencies of the first to-be-adjusted object and the second to-be-adjusted object in any two service scenarios of the first service or the first application are less than a third value.

In other words, a to be semi-statically adjusted function/variable may be a function/variable whose call frequency seldom changes with a service scenario in a running process of a service or an application. Locations of these functions/variables may be determined when the service or the application is started.

Differences between call frequencies of the third function and the fourth function in any two service scenarios of the first service or the first application are greater than a fourth value.

In other words, a to be dynamically adjusted function in a running process of a service or an application may be a function whose call frequency greatly changes with a service scenario in the running process of the service or the application. These functions need to be dynamically adjusted based on a call status in the running process of the service or the application.

With reference to the first aspect and the second aspect, in an implementation, the access rate of the first location is higher than the access rate of the second location, where the first location is in a high-speed storage area, and the second location is in a low-speed storage area; or the address of the first location is less than the address of the second location, where the first location is in a first storage area, the second location is in a second storage area, and an access rate of the first storage area is the same as an access rate of the second storage area; or the first location and the second location are in a same storage area.

The computer device may use a hierarchical memory architecture. In this case, a function/variable with a high call frequency may be stored in a high-speed storage area, and a function/variable with a low call frequency may be stored in a low-speed storage area. Alternatively, the computer device may use only one storage area or a plurality of storage areas with a same access rate to store a function/variable called in the running process of the application. In this case, a function/variable with a high call frequency may be stored in a location with a small memory address in a storage area, and a function/variable with a low call frequency may be stored in a location with a large memory address in a storage area.

With reference to the first aspect and the second aspect, in an implementation, when the first service or the first application is started, the first to-be-adjusted object is stored at the first location, and the second to-be-adjusted object is stored at the second location.

With reference to the first aspect and the second aspect, in an implementation, the method further includes: adjusting a storage location of a fifth to-be-adjusted object to a fifth location, and adjusting a storage location of a sixth to-be-adjusted object to a sixth location, where the fifth to-be-adjusted object and the sixth to-be-adjusted object are respectively a fifth function and a sixth function that are called in the first service scenario, or the fifth to-be-adjusted object and the sixth to-be-adjusted object are respectively a fifth variable and a sixth variable that are called in the first service scenario; and in the first service scenario, a call frequency of the fifth to-be-adjusted object is the same as a call frequency of the sixth to-be-adjusted object, the fifth to-be-adjusted object is called before the sixth to-be-adjusted object, the fifth location and the sixth location are in the storage area of the computer device, and an address of the fifth location is less than an address of the sixth location.

In other words, before the service or the application runs, the locations of these functions/variables may be adjusted based on call frequencies and a call order of functions/variables in the predicted service scenario. For the functions/variables with the same call frequency in the service scenario, these functions/variables may be sequentially placed in the storage area according to the call order. In this way, when a function in the storage area is called, a function/variable at a location following a location of the function/variable in the storage area may be pre-fetched and stored according to a function/variable call order, thereby improving an access hit rate and increasing an access rate.

With reference to the first aspect and the second aspect, in an implementation, the first to-be-adjusted object and the second to-be-adjusted object come from a same binary executable file or a same library file, or come from different binary executable files or different library files.

In other words, locations of functions/variables in a storage area may be adjusted in a same binary executable file or a same library file, or different binary executable files or different library files.

With reference to the first aspect, the second aspect, and a third aspect, in an implementation, after the adjusting the storage location of the first to-be-adjusted object to the first location, and adjusting the storage location of the second to-be-adjusted object to the second location, the method further includes: determining relocation information of the first to-be-adjusted object and relocation information of the second to-be-adjusted object, where the relocation information of the first to-be-adjusted object indicates a location that needs to be modified and a modification method in the first to-be-adjusted object, and the relocation information of the second to-be-adjusted object indicates a location that needs to be modified and a modification method in the second to-be-adjusted object.

With reference to the first aspect and the second aspect, in an implementation, the access rate of the third location is higher than the access rate of the fourth location, where the third location is in a high-speed storage area, and the fourth location is in a low-speed storage area; or the address of the third location is less than the address of the fourth location, where the third location is in a first storage area, the fourth location is in a second storage area, and an access rate of the first storage area is the same as an access rate of the second storage area; or the third location and the fourth location are in a same storage area.

The computer device may use a hierarchical memory architecture. In this case, a function with a high call frequency may be stored in a high-speed storage area, and a function with a low call frequency may be stored in a low-speed storage area. Alternatively, the computer device may use only one storage area or a plurality of storage areas with a same access rate to store a function called in the running process of the application. In this case, a function with a high call frequency may be stored in a location with a small memory address in a storage area, and a function with a low call frequency may be stored in a location with a large memory address in a storage area.

With reference to the first aspect and the second aspect, in an implementation, the obtaining the call frequencies of the third function and the fourth function specifically includes: obtaining the call frequencies of the third function and the fourth function in a first time period; and the adjusting the storage location of the third function to the third location, and adjusting the storage location of the fourth function to the fourth location specifically includes: in a second time period, adjusting the storage location of the third function to the third location, and adjusting the storage location of the fourth function to the fourth location, where the second time period is an adjacent time period after the first time period.

Due to time coherence, the service scenario does not change greatly in adjacent periods of time. In the running process of the service or the application, the locations of these functions in the storage area in a current time period may be adjusted based on call frequencies of these functions in a previous time period. In this way, the location of the function in the storage area may be accurately adjusted as much as possible in the running process of the service or the application.

With reference to the first aspect, the second aspect, and the third aspect, in an implementation, a duration of the first time period and a duration of the second time period are preset fixed durations, or a duration of the first time period and a duration of the second time period dynamically change based on one or more of the following factors: time, a service or an application run by a computer device, and device performance.

A duration of monitoring the call frequency of the function by the computer device and an update time interval of the location of the function in the storage area may be fixed, or may dynamically change according to factors such as a time, an application, and device performance. The device performance can be measured by CPU usage.

With reference to the first aspect and the second aspect, in an implementation, the method further includes: obtaining call frequencies and a call order of a seventh function and an eighth function, where the seventh function and the eighth function are functions that are called after execution of the first service scenario starts, the call frequency of the seventh function is the same as the call frequency of the eighth function, and the seventh function is called before the eighth function; and adjusting a storage location of the seventh function to a seventh location, and adjusting a storage location of the eighth function to an eighth location, where the seventh location and the eighth location are in the storage area of the computer device, and an address of the seventh location is less than an address of the eighth location.

In other words, in the process of executing the service scenario, the location of the function may be dynamically adjusted based on the call frequencies and the call order of the functions. Functions with a same call frequency may be sequentially placed in the storage area according to the call order. In this way, when the computer device calls a function in the storage area, the computer device may fetch a function at a location following a location of the function in the storage area in advance and store the function according to a function call order, thereby improving an access hit rate and increasing an access rate.

With reference to the first aspect and the second aspect, in an implementation, before the obtaining the call frequencies of the third function and the fourth function, the method further includes: generating shadow functions for the third function and the fourth function, where the shadow function of the third function is used to record a call action of the third function, the recorded call action of the third function is used for determining the call frequency of the third function and a call order between the third function and another function, the shadow function of the fourth function is used to record a call action of the fourth function, and the recorded call action of the fourth function is used for determining the call frequency of the fourth function and a call order between the fourth function and another function.

With reference to the first aspect and the second aspect, in an implementation, after the adjusting the storage location of the third function to the third location, and adjusting the storage location of the fourth function to the fourth location, the method further includes: changing jump information of the shadow functions corresponding to the third function and the fourth function, where the changed jump information of the shadow functions indicates the adjusted locations of the third function and the fourth function.

As mentioned in the foregoing configuration file, a call action of a function is analyzed by obtaining a trace file, where the trace file records call statuses of a large quantity of functions, and an analysis workload is relatively large. In comparison, it should be noted that a calculation amount in an analysis process can be reduced and efficiency of analyzing the call action of the function can be improved by generating a shadow function specifically for a to be dynamically adjusted function and analyzing the call action of the function based on a call status of the shadow function. In addition, it may be further understood that using the shadow function increases overheads of the device. When the application is started, some functions are adjusted through semi-static adjustment, so that a quantity of shadow functions generated during dynamic adjustment can be reduced, thereby reducing impact caused by the shadow function, improving system performance, and shortening a dynamic adjustment time in a service execution process.

With reference to the first aspect and the second aspect, in an implementation, after execution of the first service scenario stops, the method further includes: determining a second service scenario; adjusting a storage location of a ninth to-be-adjusted object to a ninth location, and adjusting a storage location of a tenth to-be-adjusted object to a tenth location, where the ninth to-be-adjusted object and the tenth to-be-adjusted object are respectively a ninth function and a tenth function that are called in the second service scenario, or the ninth to-be-adjusted object and the tenth to-be-adjusted object are respectively a ninth variable and a tenth variable that are called in the second service scenario; and in the second service scenario, a call frequency of the ninth to-be-adjusted object is higher than a call frequency of the tenth to-be-adjusted object, the ninth location and the tenth location are in the storage area of the computer device, an address of the ninth location is less than an address of the tenth location or an access rate of the ninth location is higher than an access rate of the tenth location, the second service scenario is different from the first service scenario, the ninth to-be-adjusted object is different from the first to-be-adjusted object; and the tenth to-be-adjusted object is different from the second to-be-adjusted object; and executing the second service scenario.

It can be learned that a to be semi-statically adjusted function/variable varies with a service scenario predicted by the computer device. In this way, the computer device can perform, based on the predicted service scenario, targeted adjustment on the function/variable needed in a running process of a service or an application.

With reference to the first aspect and the second aspect, in an implementation, that the computer device determines a first service scenario in a first application specifically includes: When the computer device is a terminal device, the computer device determines the first service scenario in the first application based on user information, where the user information comes from one or more of the following: information collected by a system, information collected by an application, or information configured by a user; or when the computer device is a base station device, the computer device determines the first service scenario in the first application based on configuration information, where the configuration information comes from one or more of the following: configuration information sent by an operator or preset configuration information.

According to a third aspect, an embodiment of this application provides an adjustment apparatus. The adjustment apparatus includes a prediction unit, an adjustment unit, and an execution unit. The prediction unit is configured to determine a first service scenario. The adjustment unit is configured to adjust a storage location of a first to-be-adjusted object to a first location, and adjust a storage location of a second to-be-adjusted object to a second location, where the first to-be-adjusted object and the second to-be-adjusted object are respectively a first function and a second function that are called in the first service scenario, or the first to-be-adjusted object and the second to-be-adjusted object are respectively a first variable and a second variable that are called in the first service scenario; and in the first service scenario, a call frequency of the first to-be-adjusted object is higher than a call frequency of the second to-be-adjusted object, the first location and the second location are in a storage area of an adjustment apparatus, and an address of the first location is less than an address of the second location or an access rate of the first location is higher than an access rate of the second location. The execution unit is configured to execute the first service scenario.

It can be learned that, before executing the service scenario, the adjustment apparatus may predict the service scenario that may be executed by the adjustment apparatus, and perform targeted adjustment on the storage location of the function/variable. Therefore, when executing the service scenario, the adjustment apparatus can call a function/variable with a relatively high call frequency more quickly, thereby improving execution efficiency of the service scenario. In this way, the function/variable does not need to be arranged based on the fixed storage location, thereby implementing efficiency of adjusting the storage location of the function/variable based on the service scenario. In addition, function/variable adjustment is implemented at a finer granularity in a program by adjusting the function/variable.

With reference to the third aspect, in an implementation, the adjustment apparatus further includes a collection unit. The collection unit is configured to obtain call frequencies of a third function and a fourth function, where the third function and the fourth function are functions that are called after execution of the first service scenario starts, and the call frequency of the third function is higher than the call frequency of the fourth function. The adjustment unit is further configured to adjust a storage location of the third function to a third location, and adjust a storage location of the fourth function to a fourth location, where the third location and the fourth location are in the storage area of the adjustment apparatus, and an address of the third location is less than an address of the fourth location or an access rate of the third location is higher than an access rate of the fourth location.

After execution of the service scenario starts, the storage location of the function is dynamically adjusted based on a call status of the function, to ensure that the storage location of the function can dynamically change in time based on the call frequency of the function in the process of executing the service scenario, and ensure that even if the service scenario changes, a function with a relatively high call frequency can still be quickly read as much as possible, thereby further improving access efficiency and further increasing execution efficiency of the service scenario.

According to a fourth aspect, an embodiment of this application further provides another adjustment apparatus. The adjustment apparatus includes an execution unit, a collection unit, and an adjustment unit. The execution unit is configured to execute a first service scenario. The collection unit is configured to obtain call frequencies of a third function and a fourth function, where the third function and the fourth function are functions that are called after execution of the first service scenario starts, and the call frequency of the third function is higher than the call frequency of the fourth function. The adjustment unit is configured to adjust a storage location of the third function to a third location, and adjust a storage location of the fourth function to a fourth location, where the third location and the fourth location are in a storage area of the adjustment apparatus, and an address of the third location is less than an address of the fourth location or an access rate of the third location is higher than an access rate of the fourth location.

In a process of executing a service scenario, a location of a function in a storage area is dynamically adjusted based on a change status of the service scenario, so that a function with a relatively high call frequency can be read more quickly in the process of executing the service scenario. In this way, each function in a system is dynamically adjusted based on a dynamically changing service scenario, thereby speeding up execution of the service and speeding up execution of various service scenarios. In addition, storage locations of functions may be adjusted function by function, thereby implementing function adjustment at a finer granularity in a program and improving performance of a computer device.

With reference to the fourth aspect, in an implementation, the adjustment unit is further configured to: before the first service is executed, adjust a storage location of a first to-be-adjusted object to a first location, and adjust a storage location of a second to-be-adjusted object to a second location, where the first to-be-adjusted object and the second to-be-adjusted object are respectively a first function and a second function that are called in the first service scenario, or the first to-be-adjusted object and the second to-be-adjusted object are respectively a first variable and a second variable that are called in the first service scenario; the first service scenario is a service scenario of a first service or a first application; and in any service scenario of the first service or the first application, a probability that a call frequency of the first to-be-adjusted object is higher than a call frequency of the second to-be-adjusted object is greater than a threshold, the first location and the second location are in the storage area of the adjustment apparatus, and an address of the first location is less than an address of the second location or an access rate of the first location is higher than an access rate of the second location.

In other words, the location of the function in the storage area is dynamically adjusted in the process of executing the service scenario, locations of some functions/variables in the storage area may be further adjusted in advance before execution of the service scenario.

A relative call frequency between some functions/variables adjusted before execution of the service scenario does not greatly change in any service scenario of the service or the application. For example, for a function 1 and a function 2, during execution of any service scenario of an application, a call frequency of the function 1 is higher than a call frequency of the function 2. In this case, a relative call frequency between the function 1 and the function 2 is relatively stable, and the computer device may adjust locations of the function 1 and the function 2 in advance before the application runs. Therefore, when the computer device initially runs the service scenario, the computer device can read a function with a relatively high call frequency in a storage area with a relatively high access rate; or read a function with a relatively high call frequency in a location with a relatively small address in a storage area, and read a function with a relatively low call frequency in a storage area with a relatively low access rate; or read a function with a relatively low call frequency in a location with a relatively large address in a storage area. In this way, it can be ensured that a function/variable with a higher call frequency in a running process of a service or an application can be read more quickly, and a storage area with a relatively high access rate or a relatively forward storage location in a storage area is allocated to a function/variable that is relatively frequently called.

With reference to the third aspect and the fourth aspect, in an implementation, when the adjustment unit adjusts the storage location of the first to-be-adjusted object to the first location, and adjusts the storage location of the second to-be-adjusted object to the second location, the adjustment unit is specifically configured to: based on a configuration file, adjust the storage location of the first to-be-adjusted object to the first location, and adjust the storage location of the second to-be-adjusted object to the second location, where the configuration file indicates the adjusted locations of the first to-be-adjusted object and the second to-be-adjusted object, and the configuration file is determined based on the call frequencies of the first to-be-adjusted object and the second to-be-adjusted object in a process of executing the first service scenario.

In other words, before execution of the service scenario, how to semi-statically adjust the storage location of the function/variable may be determined by using the configuration file. The configuration file may be determined in advance based on a call status of the function/variable in the process of executing the service scenario. In this way, the storage location of the function/variable does not need to be adjusted after execution of the service scenario. Therefore, when the service scenario starts, the function/variable can be in the storage location that satisfies the service scenario as much as possible.

With reference to the third aspect and the fourth aspect, in an implementation, the first service scenario is a service scenario included in at least one of 2G, 3G, 4G, and 5G services.

With reference to the third aspect and the fourth aspect, in an implementation, the first service scenario is the service scenario of the first service or the first application, and the first to-be-adjusted object, the second to-be-adjusted object, the third function, and the fourth function may satisfy any one of the following conditions:
(1) Differences between call frequencies of the first to-be-adjusted object and the second to-be-adjusted object in any other service scenario of the first service or the first application, and the call frequencies in the first service scenario are less than a first value.

In other words, a to be semi-statically adjusted function/variable is a function/variable whose call frequency does not change greatly in another service scenario compared with a pre-determined service scenario. For example, the function 1 has a relatively high call frequency in a scenario 1, and still has a relatively high call frequency in another service scenario. Therefore, locations of these functions/variables can be directly arranged in advance before the application runs, and do not need to be dynamically adjusted in the running process of the service or the application, thereby reducing a quantity of to be dynamically adjusted functions/variables.

Differences between call frequencies of the third function and the fourth function in another service scenario of the first service or the first application, and the call frequencies in the first service scenario are greater than a second value.

In other words, in a running process of a service or an application, a to be dynamically adjusted function is a function whose call frequency changes greatly in another service scenario compared with a pre-determined service scenario. For example, the function 1 has a relatively high call frequency in the scenario 1, has a relatively low call frequency in a scenario 2, and has a much lower call frequency in a scenario 3. That is, a difference between a call frequency of the function 1 in a service scenario other than the scenario 1 and the call frequency in the scenario 1 is relatively large. In this case, in the running process of the service or the application, by monitoring call statuses of these functions, locations of these functions may be dynamically adjusted, to ensure as much as possible that even if the service scenario changes in the running process of the application, a function with a high call frequency is still stored in a storage area with a relatively high access rate, or a function with a relatively high call frequency is still stored in a location with a relatively small address in a storage area. In this way, in the running process of the application, only the call statuses of these functions needed by the service or the application need to be monitored, thereby reducing a workload of the computer device and increasing a dynamic adjustment speed.

(2) Differences between call frequencies of the first to-be-adjusted object and the second to-be-adjusted object in any two service scenarios of the first service or the first application are less than a third value.

In other words, a to be semi-statically adjusted function/variable may be a function/variable whose call frequency seldom changes with a service scenario in a running process of a service or an application. Locations of these functions/variables may be determined when the service or the application is started.

Differences between call frequencies of the third function and the fourth function in any two service scenarios of the first service or the first application are greater than a fourth value.

In other words, a to be dynamically adjusted function in a running process of a service or an application may be a function whose call frequency greatly changes with a service scenario in the running process of the service or the application. These functions need to be dynamically adjusted based on a call status in the running process of the service or the application.

With reference to the third aspect and the fourth aspect, in an implementation, the access rate of the first location is higher than the access rate of the second location, where the first location is in a high-speed storage area, and the second location is in a low-speed storage area; or the address of the first location is less than the address of the second location, where the first location is in a first storage area, the second location is in a second storage area, and an access rate of the first storage area is the same as an access rate of the second storage area; or the first location and the second location are in a same storage area.

The adjustment apparatus may use a hierarchical memory architecture. In this case, a function/variable with a high call frequency may be stored in a high-speed storage area, and a function/variable with a low call frequency may be stored in a low-speed storage area. Alternatively, the adjustment apparatus may use only one storage area or a plurality of storage areas with a same access rate to store a function/variable called in the running process of the application. In this case, a function/variable with a high call frequency may be stored in a location with a small memory address in a storage area, and a function/variable with a low call frequency may be stored in a location with a large memory address in a storage area.

With reference to the third aspect, in an implementation, the adjustment unit is further configured to adjust a storage location of a fifth to-be-adjusted object to a fifth location, and adjust a storage location of a sixth to-be-adjusted object to a sixth location, where the fifth to-be-adjusted object and the sixth to-be-adjusted object are respectively a fifth function and a sixth function that are called in the first service scenario, or the fifth to-be-adjusted object and the sixth to-be-adjusted object are respectively a fifth variable and a sixth variable that are called in the first service scenario; and in the first service scenario, a call frequency of the fifth to-be-adjusted object is the same as a call frequency of the sixth to-be-adjusted object, the fifth to-be-adjusted object is called before the sixth to-be-adjusted object, the fifth location and the sixth location are in the storage area of the computer device, and an address of the fifth location is less than an address of the sixth location.

In other words, before the service or the application runs, the locations of these functions/variables may be adjusted based on call frequencies and a call order of functions/variables in the predicted service scenario. For the functions/variables with the same call frequency in the service scenario, these functions/variables may be sequentially placed in the storage area according to the call order. In this way, when a function in the storage area is called, a function/variable at a location following a location of the function/variable in the storage area may be pre-fetched and stored according to a function/variable call order, thereby improving an access hit rate and increasing an access rate.

With reference to the third aspect and the fourth aspect, in an implementation, the access rate of the third location is higher than the access rate of the fourth location, where the third location is in a high-speed storage area, and the fourth location is in a low-speed storage area; or the address of the third location is less than the address of the fourth location, where the third location is in a first storage area, the fourth location is in a second storage area, and an access rate of the first storage area is the same as an access rate of the second storage area; or the third location and the fourth location are in a same storage area.

The adjustment apparatus may use a hierarchical memory architecture. In this case, a function with a high call frequency may be stored in a high-speed storage area, and a function with a low call frequency may be stored in a low-speed storage area. Alternatively, the adjustment apparatus may use only one storage area or a plurality of storage areas with a same access rate to store a function called in the running process of the application. In this case, a function with a high call frequency may be stored in a location with a small memory address in a storage area, and a function with a low call frequency may be stored in a location with a large memory address in a storage area.

With reference to the third aspect and the fourth aspect, in an implementation, when the collection unit obtains the call frequencies of the third function and the fourth function, the collection unit is specifically configured to: obtain the call frequencies of the third function and the fourth function in a first time period; and when the adjustment unit adjusts the storage location of the third function to the third location, and adjusts the storage location of the fourth function to the fourth location, the adjustment unit is specifically configured to: in a second time period, adjust the storage location of the third function to the third location, and adjust the storage location of the fourth function to the fourth location, where the second time period is an adjacent time period after the first time period.

Due to time coherence, the service scenario does not change greatly in adjacent periods of time. In the running process of the service or the application, the locations of these functions in the storage area in a current time period may be adjusted based on call frequencies of these functions in a previous time period. In this way, the location of the function in the storage area may be accurately adjusted as much as possible in the running process of the service or the application.

With reference to the third aspect and the fourth aspect, in an implementation, the collection unit is further configured to obtain call frequencies and a call order of a seventh function and an eighth function, where the seventh function and the eighth function are functions that are called after execution of the first service scenario starts, the call frequency of the seventh function is the same as the call frequency of the eighth function, and the seventh function is called before the eighth function; and the adjustment unit is configured to adjust a storage location of the seventh function to a seventh location, and adjust a storage location of the eighth function to an eighth location, where the seventh location and the eighth location are in the storage area of the computer device, and an address of the seventh location is less than an address of the eighth location.

In other words, in the process of executing the service scenario, the location of the function may be dynamically adjusted based on the call frequencies and the call order of the functions. Functions with a same call frequency may be sequentially placed in the storage area according to the call order. In this way, when a function in the storage area is called, a function at a location following a location of the function in the storage area may be pre-fetched and stored according to a function call order, thereby improving an access hit rate and increasing an access rate.

With reference to the third aspect and the fourth aspect, in an implementation, the adjustment apparatus further includes a processing unit. The processing unit is configured to generate shadow functions for the third function and the fourth function, where the shadow function of the third function is used to record a call action of the third function, the recorded call action of the third function is used for determining the call frequency of the third function and a call order between the third function and another function, the shadow function of the fourth function is used to record a call action of the fourth function, and the recorded call action of the fourth function is used for determining the call frequency of the fourth function and a call order between the fourth function and another function.

A call action of a function is analyzed based on a call status of a shadow function, thereby reducing a calculation amount in an analysis process and improving efficiency of analyzing the call action of the function.

With reference to the third aspect, in an implementation, the prediction unit is further configured to: after execution of the first service scenario stops, determine a second service scenario; the adjustment unit is further configured to adjust a storage location of a ninth to-be-adjusted object to a ninth location, and adjust a storage location of a tenth to-be-adjusted object to a tenth location, where the ninth to-be-adjusted object and the tenth to-be-adjusted object are respectively a ninth function and a tenth function that are called in the second service scenario, or the ninth to-be-adjusted object and the tenth to-be-adjusted object are respectively a ninth variable and a tenth variable that are called in the second service scenario; and in the second service scenario, a call frequency of the ninth to-be-adjusted object is higher than a call frequency of the tenth to-be-adjusted object, the ninth location and the tenth location are in the storage area of the computer device, an address of the ninth location is less than an address of the tenth location or an access rate of the ninth location is higher than an access rate of the tenth location, the second service scenario is different from the first service scenario, the ninth to-be-adjusted object is different from the first to-be-adjusted object; and the tenth to-be-adjusted object is different from the second to-be-adjusted object; and the execution unit is further configured to execute the second service scenario.

It can be learned that a to be semi-statically adjusted function/variable varies with a predicted service scenario. In this way, targeted adjustment can be performed, based on the predicted service scenario, on the function/variable needed in a running process of a service or an application.

According to a fifth aspect, an embodiment of this application provides a computer device, including a memory, one or more processors, and one or more programs. The computer device may be a base station device or an electronic device, for example, a terminal device. When the one or more processors execute the one or more programs, the computer device is enabled to implement the method according to the first aspect or any implementation of the first aspect, and the method according to the second aspect or any implementation of the second aspect.

According to a sixth aspect, an embodiment of this application provides a computer-readable storage medium, including instructions. When the instructions are run on a computer device, the computer device is enabled to perform the method according to the first aspect or any implementation of the first aspect, or the method according to the second aspect or any implementation of the second aspect.

According to a seventh aspect, an embodiment of this application provides a computer program product. When the computer program product runs on a computer, the computer is enabled to perform the method according to the first aspect or any implementation of the first aspect, and the method according to the second aspect or any implementation of the second aspect.

### BRIEF DESCRIPTION OF DRAWINGS

FIG. 1A is a diagram of a hardware structure of an electronic device 100 according to an embodiment of this application;
FIG. 1B is a diagram of another hardware structure of an electronic device 100 according to an embodiment of this application;
FIG. 2A is a block diagram of a software structure a BBU included in a base station device when an electronic device 100 is the base station device according to an embodiment of this application;
FIG. 2B is a block diagram of a software structure of an electronic device 100 when the electronic device 100 is a terminal device according to an embodiment of this application;
FIG. 3 is an overall flowchart of a method for adjusting a program storage location according to an embodiment of this application;
FIG. 4 is a diagram of a principle of performing semi-static adjustment and dynamic adjustment by an electronic device 100 according to an embodiment of this application;
FIG. 5 is a schematic flowchart of semi-static adjustment for a function according to an embodiment of this application;
FIG. 6 is a schematic flowchart of dynamic adjustment for a function according to an embodiment of this application;
FIG. 7 is a schematic flowchart of a function adjustment process according to an embodiment of this application;
FIG. 8 is a schematic flowchart of a method for adjusting a program storage location of a variable according to an embodiment of this application; and
FIG. 9 is a diagram of a structure of an adjustment apparatus 1100 according to an embodiment of this application.

### DESCRIPTION OF EMBODIMENTS

The technical solutions according to embodiments of this application are clearly and completely described in the following with reference to the accompanying drawings. In the descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two.

The following terms "first" and "second" are merely intended for a purpose of description, and shall not be understood as implying or implying relative importance or implicitly indicating a quantity of indicated technical features. Therefore, a feature limited by "first" and "second" may explicitly or implicitly include one or more features. In the descriptions of embodiments of this application, unless otherwise specified, "a plurality of" means two or more.

To properly arrange a storage location of a function or a variable in a memory, there are the following two solutions:
One solution is as follows: A developer specifies memory levels at which code segments including different functions should be stored. After the code segments are imported into an electronic device, the electronic device may load different code segments into corresponding levels of memories based on memory levels that are specified by the developer for different code segments for storage, to implement appropriate arrangement of the functions in the hierarchical memory.

The other solution is obtaining a call status of each function in an execution process through performing instrumentation compilation on a source file and executing a service, and rearranging an order of functions to obtain an optimized executable file, thereby improving a cache hit rate when the electronic device executes the service.

However, the former solution relies on experience of the developer and requires to manually specify locations of different code segments in the memory, while the latter solution is a static compilation action and can only implement rearrangement of functions in a single source file but cannot implement function rearrangement between a plurality of dynamic libraries. In addition, in the foregoing two solutions, once arrangement of a function is completed, a location of the function in the memory does not change any more. These functions in any device are stored in a same and fixed arrangement order. However, from a perspective of users, different users have different habits of using a device, and service scenarios in which the device runs are also different. In addition, in a process in which the user uses the device, the service scenario also dynamically changes, and call frequencies and a call order of functions and/or variables vary with the service scenario.

Therefore, how to adjust a location of the function/variable in a storage area based on a service scenario is an urgent problem to be resolved currently.

According to a first aspect, an embodiment of this application provides a method for adjusting a program storage location. In the method, when starting a service or an application, a computer device may determine a service scenario of the service or the application, and determine a location of a function/variable in a system in a storage area based on the service scenario. In the service scenario, a function/variable with a relatively high call frequency may be stored in a high-speed storage area, and a function with a relatively low call frequency may be stored in a low-speed storage area; or these functions/variables are sequentially stored in the storage area according to locations based on values of call frequencies.

The computer device may include a plurality of storage areas with different access rates. The high-speed storage area may be a storage area with a relatively high access rate, and the low-speed storage area may be a storage area with a relatively low access rate. For example, the high-speed storage area may be an SRAM in the computer device, and the low-speed storage area may be a DDR. Alternatively, the computer device may include one storage area or a plurality of storage areas with a same access rate. In an actual process of reading a function, the computer device may sequentially read functions in the storage area according to an order of storage locations in one storage area and an order of the plurality of storage areas. Therefore, a function with a high call frequency is stored in a forward storage location in the one or more storage areas, so that the computer device can read the function more quickly. For specific descriptions of the storage area in the computer device, refer to subsequent content. Details are not described herein.

The service scenario may indicate a function and a service provided by a service or an application for a user in a specific environment. In a process of executing the service scenario, the computer device needs to call a function and a variable that are needed in a process running process, to implement the function and the service of the service or the application. One service or one application may have a plurality of service scenarios. In different service scenarios, the computer device may provide different functions or services. In this case, functions and variables called by the computer device may be different, and call frequencies and a call order of the functions and the variables may also be different. For example, the computer device is a base station device. The computer device may determine a service scenario of a service based on configuration information sent by an operator or preset configuration information. The service may include one or more of services such as 2G, 3G, 4G, and 5G. In an example of 5G, the service scenario may include a massive multiple-input multiple-output (Massive multiple-input multiple-output, Massive MIMO) scenario, a multimode scenario, and the like. Different service scenarios may provide different communication functions or communication services for the user in a 5G service. For example, the computer device is a terminal device. The computer device may determine a service scenario of an application based on user information. The user information may be related information of a user that uses the application, and includes information such as a gender, an age, an occupation, an account type, and a historical browsing record. The information may be information input by the user when the user registers an account on the application, or may be information input into a system by the user in a process of using the computer device. The application may be an office application, a news application, a game application, or the like installed on the computer device. In an example of the news application, the service scenario may include a text reading scenario and a video playback scenario. Different service scenarios may provide different news browsing functions or services for a user.

The computer device needs to call a function stored in the system, to implement execution of the application service. For example, when the computer device executes a phone service, the computer device may call onCreate() to display a dialing interface, and call onClick() to implement dialing of a user. In different service scenarios, the computer device may execute different programs, and call frequencies and a call order of same functions/variables of the computer device may be different.

A news application on a terminal device is used as an example. The news application may be used to display news articles and play news short videos. Different users may have different reading habits when using the news application. For example, a young person is more inclined to read a news article, and an older person is more inclined to watch a news short video. Therefore, the news application may have a text reading scenario and a video playback scenario. In order that the application can display news articles or play news short videos, the electronic device may call different functions. For example, the electronic device may need to frequently call a function needed for displaying a text, to display a text in a news article. In comparison, the electronic device may need to frequently call a function needed for playing a video, to play a news short video.

It can be learned that, according to the method for adjusting a program storage location provided in this embodiment of this application, a service scenario in which a device may be located when the device starts an application can be predicted. When the application is started, a function with a relatively high call frequency in the service scenario is stored in a high-speed storage area in advance, or stored in a forward storage location in a storage area, to increase a speed of reading the function with a relatively high access frequency in a running process of the application; and a function with a relatively low access frequency is stored in a low-speed storage area, and the high-speed storage area is reserved for a function with a relatively high access frequency; or a function with a relatively low access frequency is stored in a backward storage location in a storage area, and a forward location in the storage area is reserved for a function with a relatively high access frequency, to increase a rate at which the electronic device executes a service in a process in which a user uses the application. In addition, storage locations of a same function on the device may vary with users. Storage locations of these functions are arranged based on the service scenario, so that the location of the function in the storage area is adjusted based on the service scenario, to ensure that different users can have better use experience in a process of using the electronic device.

It should be noted that, in this embodiment of this application, the method for adjusting a program storage location provided in the first aspect may be specifically described as a semi-static adjustment process mentioned subsequently.

According to a second aspect, an embodiment of this application further provides a method for adjusting a program storage location. In the method, in a process of executing an application service, a computer device may obtain a call status of a function in a system, and determine, based on the call status, a call frequency of the function in the process of executing the service by an electronic device, to adjust locations of these functions in a storage area. A function with a relatively high call frequency may be adjusted to a high-speed storage area, and a function with a relatively low call frequency may be adjusted to a low-speed storage area; or these functions are sequentially stored in the storage area according to locations based on values of call frequencies. In this way, the electronic device may dynamically adjust a storage location of a function based on a scenario change of a service executed by the electronic device.

At different moments at which the computer device executes a service, functions called by the computer device may dynamically change, and call frequencies of different functions may also dynamically change. A news application on a terminal device is used as an example. In a process of using the news application, a user may start to read a news article by using the news application, and then watch a short news video by using the news application. In processes of displaying the news article and playing the short news video, functions frequently called by the computer device may be different. In this case, in the process of executing the service by the computer device, the location of the function in the storage area may be dynamically adjusted based on the dynamically changing call frequency of the function, to improve execution efficiency of a function with a high call frequency and improve utilization of the high-speed storage area.

It can be learned that, according to the method for adjusting a program storage location provided in this embodiment of this application, the storage location of the function in the computer device can be dynamically adjusted based on different service scenarios of the application. For example, in a process in which the computer device executes the service, when detecting that a function 1 is relatively frequently called, the computer device adjusts the function 1 to the high-speed storage area, or stores the function 1 in a forward storage location in the storage area, to increase an access rate of the function 1 by the computer device; and when detecting that a function 2 is less frequently called, the computer device adjusts the function 2 to the low-speed storage area to avoid a case in which a function that is less frequently called occupies the high-speed storage area, or stores the function 2 in a backward storage location in the storage area to avoid a case in which a function that is less frequently called occupies a forward storage location. In this way, the computer device can allocate storage space in the high-speed storage area or a forward storage location in the storage area to a function that is relatively frequently called. In this way, the computer device dynamically adjusts each function in the system based on a dynamically changing service scenario, thereby increasing a rate of executing the service by the computer device, increasing a rate of executing each service by the electronic device, and improving performance of the computer device.

It should be noted that, in this embodiment of this application, the method for adjusting a program storage location provided in the second aspect may be specifically described as a dynamic adjustment process mentioned subsequently.

Further, with reference to the first aspect and the second aspect, when starting an application, the computer device may semi-statically adjust a part of functions that may be called in a running process of the application, and dynamically adjust a remaining part of the functions based on a change of a service scenario in the running process of the application. In a process in which the service scenario changes, a probability that a call frequency of the to be semi-statically adjusted function changes is less than a threshold. In a process in which the service scenario changes, a probability that a call frequency of the to be dynamically adjusted function changes is greater than a threshold.

In other words, when the application is started and the service is not executed, a function adjusted by the computer device is a function whose call frequency seldom changes with the service scenario. Locations of these functions may be determined when the application is started. A to be dynamically adjusted function is a function whose call frequency greatly changes with the service scenario. Locations of these functions need to be dynamically adjusted based on actual call statuses of the functions in the service execution process.

In this way, beneficial effects brought by the method for adjusting a program storage location provided in the first aspect and the second aspect can be obtained. In addition, because the to be dynamically adjusted function is a part of functions other than a to be semi-statically adjusted function, a workload of analyzing a status of a function when the computer device executes the service is reduced, thereby increasing a dynamic adjustment rate.

In the following embodiments of this application, the computer device may be a device such as an electronic device or a base station device. The electronic device may be a terminal device such as a mobile phone, a tablet computer, a desktop computer, a laptop computer, a handheld computer, or a notebook computer. A device type of the computer device is not limited in embodiments of this application.

In embodiments of this application, the electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an in-vehicle device, a base station device, an industrial control device, a satellite, a router, a switch, a medical device, an avionic device, a smart home device, and/or a smart city device. A specific type of the electronic device is not specially limited in embodiments of this application.

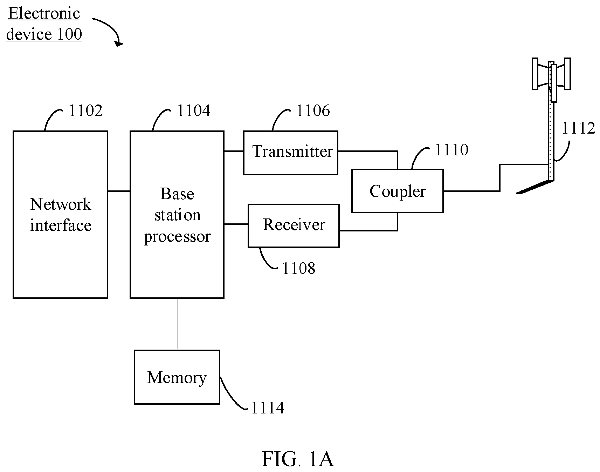

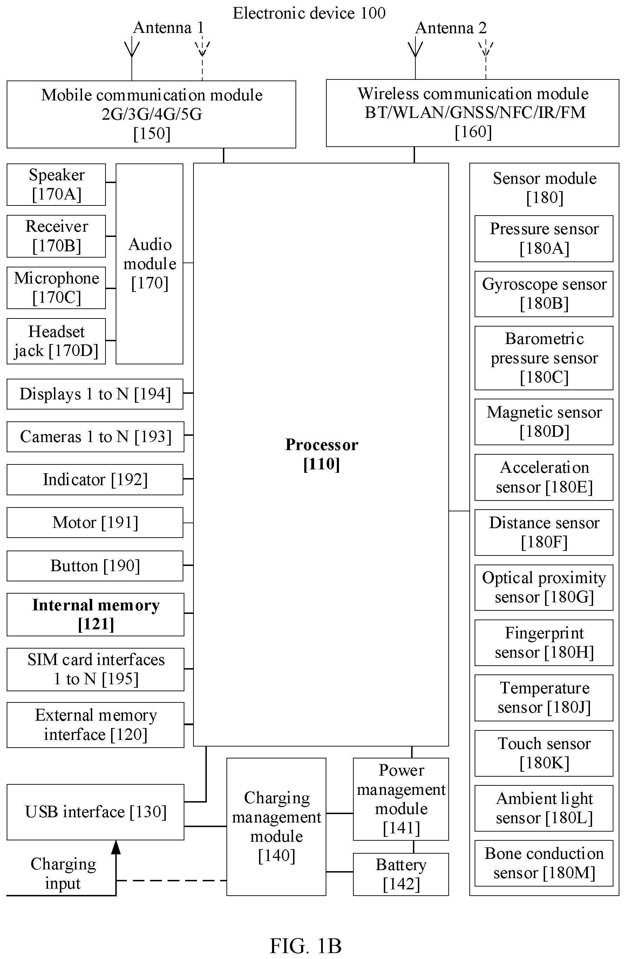

FIG. 1A and FIG. 1B each are a diagram of a hardware structure of an electronic device 100. For example, the electronic device 100 is a base station device, and FIG. 1A is a diagram of a hardware structure of the base station device. For example, the electronic device 100 is a terminal device such as a mobile phone, and FIG. 1B is a diagram of a hardware structure of the terminal device.

With reference to FIG. 1A, the electronic device 100 may include a network interface 1102, a base station processor 1104, a transmitter 1106, a receiver 1108, a coupler 1110, an antenna 1112, and a memory 1114. In some embodiments of this application, these components may be connected by using a bus or in another manner. A bus connection is used as an example in FIG. 1A.

The network interface 1102 is used for data communication between the electronic device 100 and user equipment (a mobile station MS in 2G and UE in 3G and 4G). In specific implementation, the network interface 1102 may include one or more of a GSM (2G) wireless network interface, a WCDMA (3G) wireless network interface, an LTE (4G) wireless network interface, a 5G network interface, and the like.

The antenna 1112 is configured to: convert electromagnetic energy in a transmission line into an electromagnetic wave in free space, or convert an electromagnetic wave in free space into electromagnetic energy in a transmission line. The coupler 1110 is configured to: divide a mobile communication signal into a plurality of signals, and allocate the plurality of signals to a plurality of receivers 1108.

The transmitter 1106 is configured to perform transmission processing (for example, modulation) on a mobile communication signal generated by the base station processor 1104. The receiver 1108 is configured to perform reception processing (for example, demodulation) on a mobile communication signal received by the antenna 1112. The transmitter 1106 and the receiver 1108 may be considered as a wireless modem. During specific implementation, there may be one or more transmitters 1106 or receivers 1108.

The memory 1114 is configured to store program code. During specific implementation, the memory 1114 may use a read-only memory (Read Only Memory, ROM), and the read-only memory may be configured to store the program code.

In this embodiment of this application, the storage area 1114 may include one or more storage areas, and the one or more storage areas may be configured to store a function and a variable that need to be called in a running process of a service. When the electronic device 100 stores these functions and variables in only one storage area, a function or variable in a forward storage location can be preferentially read. When the electronic device 100 stores these functions and variables in a plurality of storage areas, the plurality of storage areas may include storage areas with a same access rate and storage areas with different access rates. For storage areas with a same access rate, a function or a variable in a forward storage location can be preferentially accessed. For storage areas with different access rates, a storage area with a relatively high access rate can implement faster access of a function and a variable in the storage area.

It should be understood that a storage area may be alternatively disposed in the memory 1114 to store a function and a variable that need to be called in a running process of a service. This is not limited in embodiments of this application.

The base station processor 1104 is configured to manage a wireless channel, make a call, establish and remove a communication link, control cell handover of user equipment in a local control area, and the like. During specific implementation, the base station processor 1104 may include modules such as an AM/CM module (used as a center for speech channel switch and information exchange), a BM module (configured to complete call processing, signaling processing, radio resource management, radio link management, and circuit maintenance functions), and a TCSM module (configured to complete multiplexing, demultiplexing, and code conversion functions). For specific information, refer to knowledge about mobile communication.

In this embodiment of this application, the base station processor 1104 is further configured to call the program code stored in the memory 1114 to perform the following steps:
before the electronic device 100 executes a service scenario, predict the service scenario;
adjust a storage location of a function/variable based on the predicted service scenario; and
in a process of executing the service scenario, manage and control the electronic device 100 to call different functions and read different variables, and monitor a call action performed by the electronic device 100 for a function.

It should be noted that the electronic device 100 may be used in a 2G communication system (such as GSM), a 3G communication system (such as UMTS), a 4G communication system (LTE), and a 5G communication system.

It may be understood that the electronic device 100 used as a base station device may further include more or fewer components. This is not limited in embodiments of this application.

With reference to FIG. 1B, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/ or a neural-network processing unit (neural-network processing unit, NPU). Different processing units may be independent components, or may be integrated into one or more processors.

In some embodiments, the processor 110 may be configured to: when the electronic device 100 executes a service, manage and control the electronic device 100 to call different functions and read different variables. In addition, the processor 110 may be further configured to: before execution of a service scenario, predict the service scenario, determine a location of a function/variable in a storage area based on the service scenario, and monitor a call action performed by the electronic device 100 for the function in a process of executing the service by the electronic device 100, where the call action may be used for determining a call frequency of each function in a process of executing the service by the electronic device 100; and determine a storage location of each function in the storage area based on the call frequency.

The controller may generate an operation control signal based on an instruction operation code and a time sequence signal, to complete control of instruction fetching and instruction execution.

A memory may be further disposed in the processor 110, and is configured to store instructions and a function. In some embodiments, the memory in the processor 110 is a cache memory. The memory may store instructions or a function that has been used or cyclically used by the processor 110. If the processor 110 needs to use the instructions or the function again, the processor may directly call the instructions or the function from the memory. This avoids repeated access, reduces waiting time of the processor 110, and improves system efficiency.

In some embodiments, the memory in the processor 110 may include a plurality of storage areas. For example, the plurality of storage areas may be a cache and an SRAM. In a process in which the electronic device 100 reads target content, for example, a function, the electronic device 100 may first search the cache, and then search the SRAM or the internal memory 121 when the target content is not hit in the cache (the target content is not read).

It should be understood that the processor 110 may include only the cache but not the memory. A quantity of storage areas actually included in the processor 110 is not limited in embodiments of this application.

The charging management module 140 is configured to receive a charging input from a charger. The charging management module 140 may further supply power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display 194.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processor module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. In some embodiments, the electronic device may include one or N displays 194, where N is a positive integer greater than 1.

The electronic device 100 may implement a shooting function through the camera 193, the ISP, the video codec, the GPU, the display 194, the application processor, and the like.

The camera 193 is configured to capture a static image or a video. In some embodiments, the electronic device 100 may include one or N cameras 193, where N is a positive integer greater than 1.

The internal memory 121 may include one or more random access memories (random access memories, RAMs) and one or more non-volatile memories (non-volatile memories, NVMs).

The random access memory may include a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth generation DDR SDRAM is generally referred to as a DDR5 SDRAM), and the like. The non-volatile memory may include a magnetic disk storage device, a flash memory (flash memory), and a new-type state memory (for example, a phase change memory (phase change memory, PCM), a magneto-resistive random access memory (magneto-resistive random access memory, MRAM), a resistive random access memory (resistive random access memory, RRAM), and the like).

The flash memory may be classified into an NOR flash, an NAND flash, a 3D NAND flash, and the like according to an operation principle; may be classified into a single-level cell (single-level cell, SLC), a multi-level cell (multi-level cell, MLC), a triple-level cell (triple-level cell, TLC), a quad-level cell (quad-level cell, QLC), and the like based on a quantity of electric potential levels of a cell; or may be classified into a universal flash storage (English: universal flash storage, UFS), an embedded multimedia card (embedded multimedia card, eMMC), and the like based on a storage specification.

The random access memory may be directly read and written by the processor 110. The random access memory may be configured to store an executable program (for example, machine instructions) in an operating system or another running program, and may be further configured to store a function of a user, a function of an application, and the like.

The non-volatile memory may store an executable program, a function of a user, a function of an application, and the like that may be loaded into the random access memory in advance for directly reading and writing performed by the processor 110.

In this embodiment of this application, the electronic device 100 may store, in one or more storage areas in the internal memory 121, a function and a variable that need to be called in a running process of a service or an application, or the electronic device 100 may further store, in a storage area in the processor 110, for example, an SRAM, a function and a variable that need to be called in a running process of an application. When the electronic device 100 stores these functions and variables in only one storage area, a function or variable in a forward storage location can be preferentially read. When the electronic device 100 stores these functions and variables in a plurality of storage areas, the plurality of storage areas may include storage areas with a same access rate and storage areas with different access rates. For storage areas with a same access rate, a function or a variable in a forward storage location can be preferentially accessed. For storage areas with different access rates, a storage area with a relatively high access rate can implement faster access of a function and a variable in the storage area.

The external memory interface 120 may be configured to connect to an external non-volatile memory, to expand a storage capability of the electronic device 100. The external non-volatile memory communicates with the processor 110 through the external memory interface 120, to implement a function storage function. For example, a file such as music or a video is stored in the external non-volatile memory.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and can convert the pressure signal into an electrical signal. The electronic device 100 determines pressure intensity based on a change of a capacitance. When a touch operation is performed on the display 194, the electronic device 100 detects intensity of the touch operation through the pressure sensor 180A. The electronic device 100 may also calculate a touch location based on a detection signal of the pressure sensor 180A.

The gyroscope sensor 180B may be configured to determine a motion posture of the electronic device 100.

The barometric pressure sensor 180C is configured to measure barometric pressure.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover by using the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the electronic device 100.

The distance sensor 180F is configured to measure a distance.

The optical proximity sensor 180G may include, for example, a light-emitting diode (LED) and an optical detector, for example, a photodiode. When sufficient reflected light is detected, it may be determined that there is an object near the electronic device 100. When insufficient reflected light is detected, the electronic device 100 may determine that there is no object near the electronic device 100.

The ambient light sensor 180L is configured to sense ambient light brightness. The electronic device 100 may adaptively adjust brightness of the display 194 based on the sensed ambient light brightness.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194.

The bone conduction sensor 180M may obtain a vibration signal.

The button 190 includes a power button, a volume button, and the like. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback.

The indicator 192 may be an indicator light, and may be configured to indicate a charging status and a power change, or may be configured to indicate a message, a missed call, a notification, and the like.

The SIM card interface 195 is configured to connect to a SIM card.

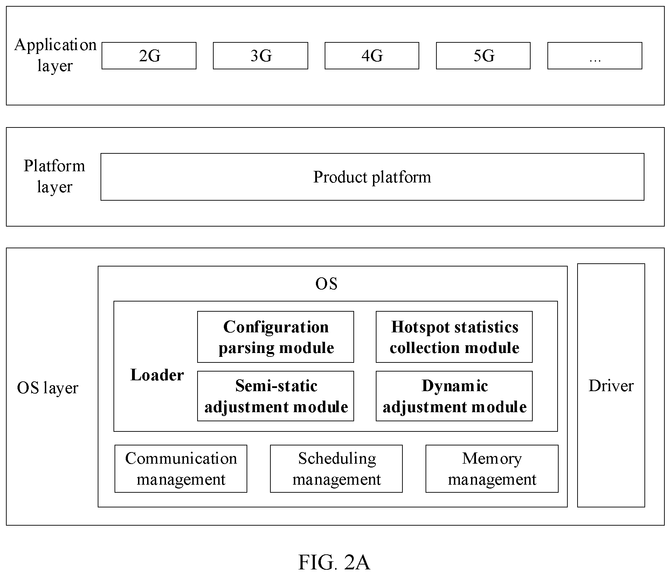

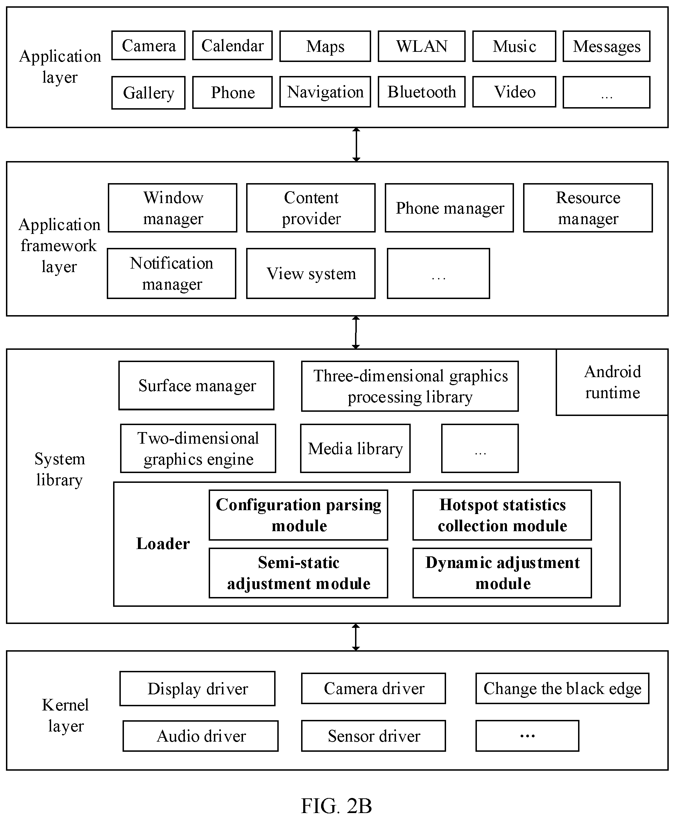

FIG. 2A and FIG. 2B each are a block diagram of a software structure of an electronic device 100 according to an embodiment of this application. For example, the electronic device 100 is a base station device, and FIG. 2A is a block diagram of a software structure of a building baseband unit (Building Base band unit, BBU) included in the base station device. For example, the electronic device 100 is a terminal device, and FIG. 2B is a block diagram of a software structure of the terminal device.

The BBU is configured to provide an external interface for a base station device, and complete system resource management, operation and maintenance, and environment monitoring functions. With reference to FIG. 2A, the software structure of the BBU may be divided into three layers: an application layer, a platform layer, and an OS layer.

The application layer may include one or more services, including 2G, 3G, 4G, 5G, and the like.

The platform layer may include a product platform. The product platform may be configured to implement resource management and communication between chips.

The OS layer may include an OS module and a driver.

The OS module may include a plurality of submodules such as a loader, communication management, scheduling management, and memory management.

The loader is configured to load a program and a library, and is an indispensable component for executing the program. The loader is responsible for sending the program to a memory, to prepare for running of the program. The loader may include a configuration parsing module, a semi-static adjustment module, a hotspot statistics collection module, and a dynamic adjustment module.

The configuration parsing module is configured to parse a configuration file, and determine a function that needs to be adjusted and that is indicated by the configuration file, a to be semi-statically adjusted function, and an adjusted location of the to be semi-statically adjusted function. Further, the configuration file may further indicate a to be dynamically adjusted function. Alternatively, the configuration file indicates a variable that needs to be semi-statically adjusted. For specific descriptions of the configuration file, refer to subsequent content. Details are not described herein.

The semi-static adjustment module is configured to adjust a to be semi-statically adjusted function/variable that is determined by parsing the configuration file. This specifically includes: adjusting a location of the to be semi-statically adjusted function/variable in a storage area.

The hotspot statistics collection module is configured to record a call status of a function called by an electronic device when the electronic device executes a service. Further, the hotspot statistics collection module may be further configured to analyze a call frequency and a call order of the function based on the call status. The call frequency and the call order may be used for determining an adjusted location of the function in a dynamic adjustment process. An adjusted location of a function with a high call frequency is in a storage area with a high access rate, and an adjusted location of a function with a low call frequency is in a storage area with a low access rate. Alternatively, an adjusted location of a function with a high call frequency is in a forward location in a storage area, and a location of a function with a low call frequency is in a backward location in the storage area. Further, a storage order of functions with a same call frequency in the storage area is a call order of these functions.

The dynamic adjustment module is configured to adjust a location of the function in the storage area based on the call frequency and the call order that are of the function and that are determined by the hotspot statistics collection module.

The driver is configured to implement data transmission between the system and a hardware device.

It may be understood that the method for adjusting a program storage location provided in this embodiment of this application may be applied to a BBU of a base station device, to adjust a storage location of a function/variable in a system of the BBU. In addition, the software structure of the BBU may further include more or fewer modules. This is not limited in this embodiment of this application.

For example, the electronic device 100 is a terminal device. The electronic device 100 may be a portable terminal device carrying iOS, Android, Microsoft, or another operating system. For example, the portable terminal device may be a mobile phone, a tablet computer, or a wearable device. Alternatively, the electronic device 100 may be a non-portable terminal device such as a laptop (Laptop) having a touch-sensitive surface or a touch panel, or a desktop computer having a touch-sensitive surface or a touch panel. The software system of the electronic device 100 may use a layered architecture, an event-driven architecture, a microkernel architecture, a micro service architecture, or a cloud architecture. In this embodiment of the present invention, an Android system of a layered architecture is used as an example to illustrate the software structure of the electronic device 100.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2B, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2B, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain a function, and enable the function to be accessed by an application. The function may include a video, an image, an audio, calls that are made and answered, a browsing history and a bookmark, a phone book, and the like.

The view system includes visual controls such as a control for displaying a text and a control for displaying an image. The view system may be configured to construct an application. A display interface may include one or more views. For example, the display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, and give a message notification. The notification manager may alternatively be a notification that appears in a top status bar of the system in a form of a graph or a scroll bar text, for example, a notification of an application that runs on a background, or may be a notification that appears on the screen in a form of a dialog window. For example, text information is displayed in the status bar, an alert tone is made, the electronic device vibrates, or an indicator blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a loader and a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The loader is responsible for sending a program to the memory to prepare for running of the program. The loader may include a configuration parsing module, a semi-static adjustment module, a hotspot statistics collection module, and a dynamic adjustment module. For specific descriptions of the modules in the loader, refer to related content in FIG. 2A. Details are not described herein again.

The kernel layer is a layer between hardware and software. The kernel layer includes at least a display driver, a camera driver, an audio driver, and a sensor driver.

It may be understood that the software framework of the electronic device 100 may further include more or fewer modules. This is not limited in embodiments of this application.

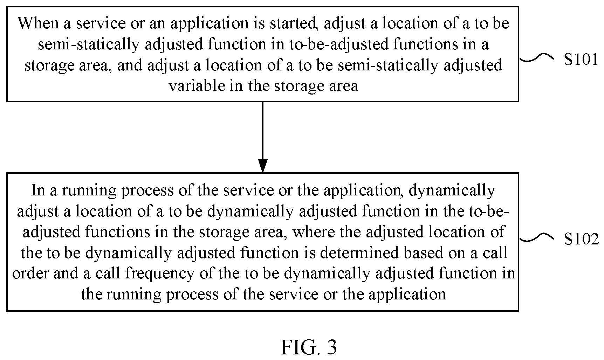

FIG. 3 to FIG. 7 each describe a process of describing a location of a function in a storage area according to an embodiment of this application.

The following provides overall description of a method for adjusting a program storage location according to embodiments of this application.

FIG. 3 is an overall flowchart of a method for adjusting a program storage location according to an embodiment of this application.

As shown in FIG. 3, the method for adjusting a program storage location may include the following steps.

S101: When starting a service or an application, an electronic device 100 adjusts a location of a to be semi-statically adjusted function in to-be-adjusted functions in a storage area, and adjusts a location of a to be semi-statically adjusted variable in the storage area.

For example, when the electronic device 100 is a base station device, and the service is started, the electronic device 100 may adjust the location of the to be semi-statically adjusted function in the to-be-adjusted functions in the storage area, and adjusts the location of the to be semi-statically adjusted variable in the storage area.

The service may be at least one of 2G, 3G, 4G, and 5G, and in particular, may be at least one of 4G and 5G. These services have a plurality of service scenarios. In an example of 5G, the service scenario may include a service scenario such as a multimode scenario or a massive MIMO scenario.

When the electronic device 100 starts the service at different moments, different service scenarios of the service may be executed, or a service scenario may change in a service running process. The service scenario specifically executed by the electronic device 100 may be determined based on configuration information sent by an operator or preset configuration information.

For example, when the electronic device 100 is a terminal device, and the application is started, the electronic device 100 may adjust the location of the to be semi-statically adjusted function in the to-be-adjusted functions in the storage area, and adjusts the location of the to be semi-statically adjusted variable in the storage area.

The application may be any application installed on the electronic device 100, for example, a camera application, an instant messaging application, a game application, or a livestreaming application. These applications have a plurality of service scenarios. In an example of the livestreaming application, a service scenario may include a livestreaming scenario and a livestreaming watching scenario.

When the electronic device 100 starts the application at different moments, different service scenarios of the application may be executed, or a service scenario may change in an application running process. The specific service scenario executed by the electronic device 100 may be determined based on a habit of a user that uses the application.

It should be understood that the electronic device 100 may alternatively be an electronic device of another type. A type of the electronic device 100 is not limited in this embodiment of this application.

The function and the variable are a function and a variable that need to be called by the electronic device 100 to execute the service scenario after the electronic device 100 starts the service or the application. When the service scenario changes, call frequencies and call orders of the function and the variable that are called by the electronic device 100 may change.

The to-be-adjusted function may be a function in a file such as a dynamic library or a basic bin file. The dynamic library includes functions that can be simultaneously used by one or more programs. A process may implement service execution by calling a function in the dynamic library. The basic bin file is a binary executable file. For example, the bin file may be Linux compression and decompression tar executable files. The dynamic library may be a library file preset in an operating system, or may be a library file carried in an application installed on the electronic device 100. The basic Bin file may also be a file carried in an application installed on the electronic device 100. A source of a file carrying a to-be-adjusted function is not limited in this embodiment of this application.

In this embodiment of this application, the to-be-adjusted function may be a function that may be called by the electronic device 100 from a file such as a dynamic library or a basic bin file in a process of executing the service scenario. The electronic device 100 may determine the to-be-adjusted function based on a configuration file. For specific descriptions of the configuration file, refer to subsequent content. Details are not described herein.

The storage area in the electronic device 100 may use the following two design solutions:
(1) The storage area in the electronic device 100 may use a hierarchical memory architecture.

When the electronic device 100 uses the hierarchical memory architecture, the electronic device 100 may include a plurality of storage areas with different access rates. The storage areas include a high-speed memory and a low-speed memory. For example, the electronic device 100 may include an L1 high-speed memory, an L2 high-speed memory, and a DDR. An access rate of the L1 high-speed memory is higher than an access rate of the L2 high-speed memory, and the access rate of the L2 high-speed memory is higher than an access rate of the DDR.

The electronic device 100 may store different functions in storage areas with different access rates based on call frequencies of the functions and a call order of the functions. Functions at a same level may be arranged in a call order, to increase a running speed of the electronic device as much as possible.

(2) The electronic device 100 includes only one storage area or a plurality of storage areas with a same access rate, or the storage area uses a plurality of non-uniform memory access (Non-Uniform Memory Access, NUMA) architectures.

When the storage area of the electronic device 100 uses a NUMA architecture, performance of a core access node is higher than performance of an external node, and effect similar to a hierarchical memory may be used, that is, a function with a relatively high call frequency is stored in a node as soon as possible based on an access rate. For the plurality of storage areas with the same access rate, the electronic device 100 may read, according to an order of storage locations in one storage area and an order of the plurality of storage areas, functions stored in the storage areas. In other words, a function in a forward storage location can be preferentially called. The electronic device 100 may store different functions in forward or backward storage locations in the storage areas based on call frequencies of the functions and a call order of the functions, to increase a running speed of the electronic device as much as possible. A more forward storage location in the storage area corresponds to a smaller memory address.

In the process in which the electronic device 100 executes the service scenario, a function called by the electronic device 100 may dynamically change with the service scenario of the service or the application. For example, a process in which the electronic device 100 runs a news application may include a text reading scenario and a video playback scenario.

The to be semi-statically adjusted function may be a part of the to-be-adjusted functions. In an initial service scenario, when the service scenario changes from the initial service scenario to another service scenario, change of a call frequency of the part of functions is less than a threshold. It may be further understood that the to be semi-statically adjusted function may be a function with a call frequency whose change is less than the threshold in any change of the service scenario. In other words, when the service scenario executed by the electronic device 100 changes, the call frequency of the part of functions basically remains unchanged. For example, in a process in which the electronic device 100 runs a news application, even if a text reading scenario is switched to a video playback scenario, a difference between call frequencies of a function 1 before and after the switching is not large. In this case, it indicates that the function 1 is a to be semi-statically adjusted function.

When an overall call frequency of the to be semi-statically adjusted function in the service execution process is relatively high, the to be semi-statically adjusted function may be adjusted to a storage area with a relatively high access rate in the hierarchical memory, or the to be semi-statically adjusted function may be adjusted to a forward storage location in the storage area. When an overall call frequency of the to be semi-statically adjusted function in the service execution process is relatively low, the to be semi-statically adjusted function may be adjusted to a storage area with a relatively low access rate in the hierarchical memory, or the to be semi-statically adjusted function may be adjusted to a backward storage location in the storage area.

Further, the to be semi-statically adjusted function may be a function with a call order whose change is less than a threshold when the service scenario changes. In other words, the call frequency of the part of functions seldom changes with the service scenario, and the call order of the part of functions also seldom changes with the service scenario. For example, in a process in which the electronic device 100 runs a news application, even if a text reading scenario is switched to a video playback scenario, a function 1 is first called before and after the switching, and then a function 2 is called by using the function 1. In addition, call frequencies of the function 1 and the function 2 do not change greatly. Therefore, it indicates that the function 1 and the function 2 are to be semi-statically adjusted functions.

In this case, the electronic device 100 can determine an approximate location of the to be semi-statically adjusted function, and can further determine a storage order of to be semi-statically adjusted functions in the storage area. The storage order of the functions is arranged based on the call order of the functions.

The electronic device 100 may determine, based on the configuration file, the to be semi-statically adjusted function and the location of the to be semi-statically adjusted function in the storage area. For specific descriptions of the configuration file, refer to subsequent content. Details are not described herein.

In other words, before the electronic device 100 executes the service, the electronic device 100 may adjust a storage location of a part of functions in the to-be-adjusted functions in advance. In this way, a quantity of to be dynamically adjusted functions by the electronic device 100 in the service execution process can be reduced, and a dynamic adjustment speed can also be increased.

Similar to the descriptions of the to be semi-statically adjusted function, a to be semi-statically adjusted variable also comes from the dynamic library or the basic bin file. In the process of executing the service scenario, the electronic device 100 may call a function in a file such as a dynamic library or a basic bin file, and may also access a variable in the file such as a dynamic library or a basic bin file, to implement running of a corresponding function of a service or an application.

The to be semi-statically adjusted variable may be a variable with a call frequency whose change is less than a threshold in a process in which an initial service scenario is changed to another service scenario of the service or the application. In this way, when the service or the application is started, a storage location of a variable that may need to be called during running of the service or the application may be adjusted in advance. Therefore, in a running process of the service or the application, a variable with a relatively high call frequency or a variable with a forward call order can be preferentially called.

Similarly, the electronic device 100 may also determine, based on the configuration file, the to be semi-statically adjusted variable and the location of the to be semi-statically adjusted variable in the storage area.

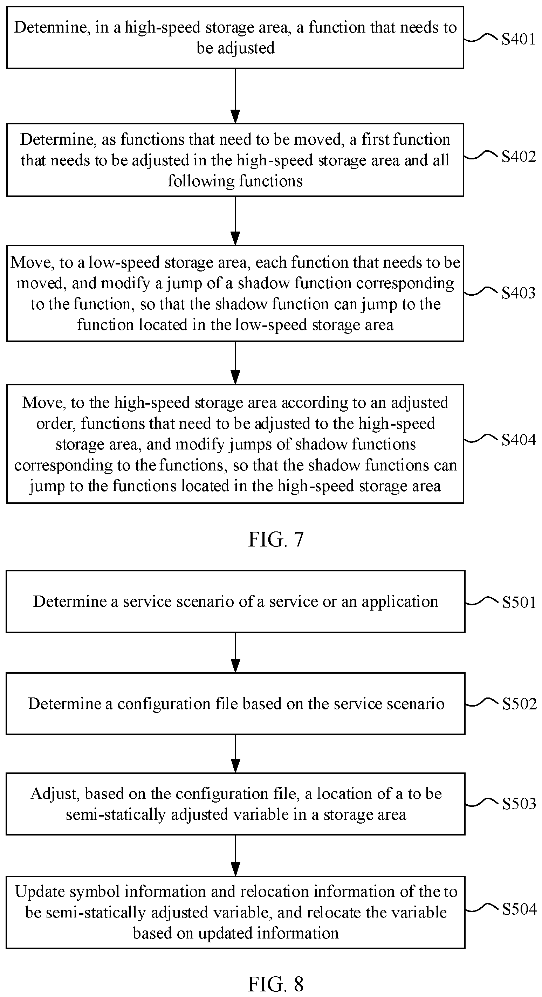

In other words, when starting the service or the application, the electronic device 100 adjusts the location of the to be semi-statically adjusted function in the storage area, and may adjust the location of the to be semi-statically adjusted variable in the storage area. For details of adjustment of the to be semi-statically adjusted variable, refer to subsequent related content in FIG. 8. Details are not described herein.

It should be understood that, in this embodiment of this application, the to be semi-statically adjusted function and the to be semi-statically adjusted variable may be collectively referred to as to-be-adjusted objects, for example, a first to-be-adjusted object, a second to-be-adjusted object, a fifth to-be-adjusted object, and a sixth to-be-adjusted object.

S102: In the running process of the service or the application, the electronic device 100 dynamically adjusts a location of a to be dynamically adjusted function in the to-be-adjusted functions in the storage area, where the adjusted location of the to be dynamically adjusted function is determined based on a call order and a call frequency of the to be dynamically adjusted function in the running process of the service or the application.

The to be dynamically adjusted function may be a part or all of functions other than the to be semi-statically adjusted function in the to-be-adjusted functions. Change of a call frequency of the part of functions in different service scenarios executed by the electronic device 100 is greater than a threshold. Further, change of a call order of the part of functions is also greater than a threshold. In other words, in the process in which the electronic device 100 executes the service scenario, when the service scenario changes, the call frequency and the call order of the to be dynamically adjusted function also change greatly. It can be learned that the part of functions needs to be dynamically adjusted in real time based on a specific service scenario executed by the electronic device 100.

Due to time coherence, the service scenario does not change greatly in adjacent periods of time. In the process in which the electronic device 100 executes the service scenario, the electronic device 100 may dynamically adjust, based on a call frequency and a call order of each to be dynamically adjusted function in a previous adjacent time period, a current location of the to be dynamically adjusted function in the storage area. If the call frequency of the to be dynamically adjusted function is relatively high in the current adjacent time period, the to be dynamically adjusted function is currently adjusted to a storage area with a relatively high access rate, or in a forward location in the storage area. If the call frequency of the to be dynamically adjusted function is relatively low in the current adjacent time period, the to be dynamically adjusted function is currently adjusted to a storage area with a relatively low access rate, or in a backward location in the storage area. In addition, a storage order of a plurality of to be dynamically adjusted functions in the storage area may be further determined based on a call order of the to be dynamically adjusted functions in a process in which the electronic device 100 executes the service in the previous adjacent time period. The storage order of the to be dynamically adjusted functions is the call order of these functions. Preferably, for functions with different call frequencies, the electronic device 100 may store the functions based on values of the call frequencies. A function with a higher call frequency corresponds to a more forward memory address of an adjusted location in the storage area, or a higher access rate of an adjusted location in the storage area. For functions with a same call frequency, the electronic device 100 may store the functions according to the call order. A function with a forward call order may be stored in a forward location of a memory address in the storage area, or a location with a higher access rate in the storage area.

In general, when the electronic device 100 executes a specific service scenario, adjustment performed by the electronic device 100 on a function in a system may include two phases: a semi-static adjustment phase and a dynamic adjustment phase. In the semi-static adjustment phase, a location of a part of functions in the system may be adjusted before the service is executed, and then the remaining part of functions is dynamically adjusted in real time in the process in which the electronic device 100 executes the service.

It may be understood that, in this embodiment of this application, the electronic device 100 may perform only step S101, or may perform only step S102. In other words, the electronic device 100 may semi-statically adjust the function only when starting the service or the application. In this way, although the electronic device 100 does not dynamically adjust the location of the function in the running process of the service or the application, when the service or the application is started, the service scenario of the application is determined in advance based on user information, and targeted adjustment is performed on the function, to adjust the location of the function in the storage area based on the service scenario. Alternatively, the electronic device 100 may skip semi-static adjustment, and dynamically adjust the function based on a call status of the function in the running process of the service or the application. In this way, although the electronic device 100 monitors a large quantity of functions, the electronic device 100 can dynamically monitor the call status of the function, sense a change of the service scenario, and dynamically adjust the location of the function based on the change, to dynamically adjust the location of the function in the storage area based on the service scenario.

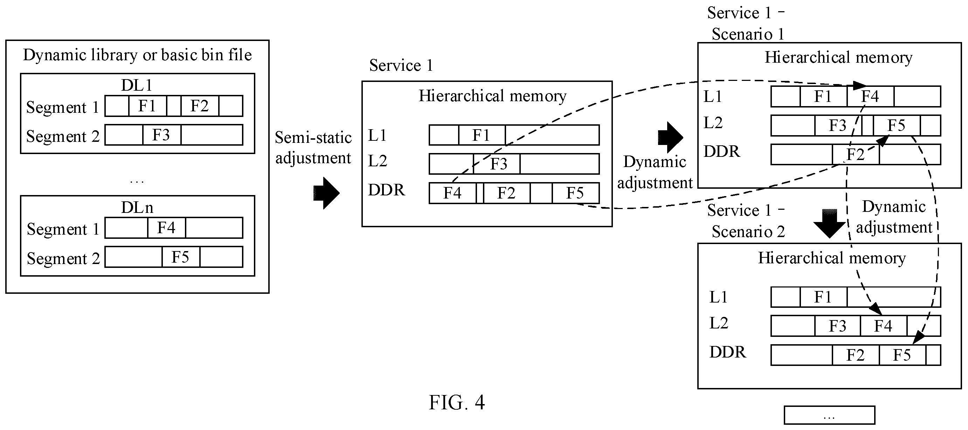

By using a specific example, the following describes a process in which the electronic device 100 performs semi-static adjustment and dynamic adjustment based on the hierarchical memory. FIG. 4 is a diagram of a principle of performing semi-static adjustment and dynamic adjustment by an electronic device 100.

As shown in FIG. 4, a to-be-adjusted function may be functions F1 to F5 in n files DL1 to DLn. For example, these files may be ELF files. The n files include a plurality of segments. Different segments include a plurality of functions. In the DL1 file, a segment 1 includes the functions F1 and F2, and a segment 2 includes the function F3. In the DLn file, a segment 1 includes the function F4, and the segment 2 includes the function F5. A hierarchical memory in the electronic device 100 may include three storage areas: L1, L2, and DDR. An access rate of L1 is higher than an access rate of L2, and the access rate of L2 is higher than an access rate of DDR.

In a process of executing a service 1, F1, F2, and F3 are functions that are determined as functions whose call frequencies remain unchanged. A call frequency of F1 remains the highest, and a call frequency of F2 remains the lowest. Call frequencies of F4 and F5 and a call order of F4 and F5 and another function change with a service scenario. Therefore, F1, F2, and F3 are to be semi-statically adjusted functions, and F4 and F5 are to be dynamically adjusted functions.

Therefore, after the functions F1 to F5 are semi-statically adjusted, F1 is adjusted to L1, F3 is adjusted to L2, and F4, F2, and F5 are located in DDR. Then, in a process in which the electronic device 100 executes the service 1, in a scenario 1, the electronic device 100 detects that the call frequencies of F4 and F5 are relatively high, F4 is called after F1, and F5 is called after F3. In the scenario 1, the electronic device 100 adjusts F4 to L1 but after L1, and adjusts F5 to L2 but after F3. When the electronic device 100 detects a scenario 2, the call frequencies of F4 and F5 both decrease, F4 is called after F3, and F5 is called after F2. In the scenario 2, the electronic device 100 adjusts F4 to L2 but after F3, and adjusts F5 to DDR but after F2. By analogy, the electronic device 100 may dynamically adjust storage locations of F4 and F5 based on call statuses of the to be dynamically adjusted functions F4 and F5 in a service execution process.

It can be learned that the semi-static adjustment may be considered as preliminary adjustment for a function, and the dynamic adjustment is specifically targeted fine-grained adjustment performed based on a specific status of a service, to ensure that a function in the electronic device 100 can be correctly placed in a location in storage space of the electronic device 100 based on a call status in a specific service scenario, thereby improving service execution efficiency.

It may be understood that FIG. 4 is merely an example, and does not constitute a limitation on embodiments of this application.

The following describes semi-static adjustment and dynamic adjustment in detail.

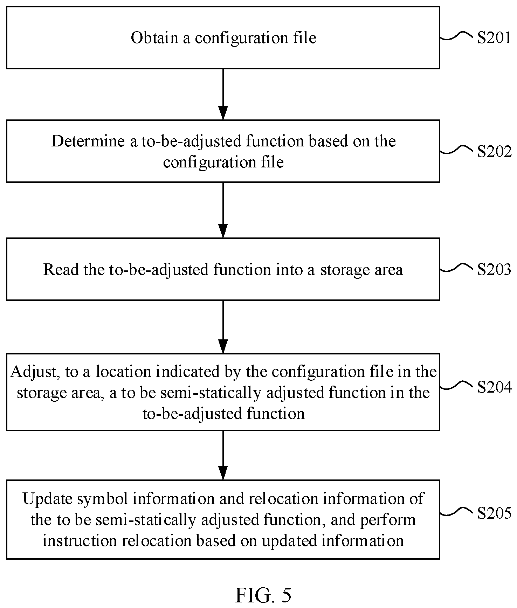

FIG. 5 is a schematic flowchart of semi-static adjustment for a function according to an embodiment of this application.

As shown in FIG. 5, the semi-static adjustment may include the following steps.

S201: An electronic device 100 obtains a configuration file.

The configuration file indicates a to-be-adjusted function that may be called in a process in which the electronic device 100 runs a service (for example, a first service) or an application (for example, a first application), a to be semi-statically adjusted function in to-be-adjusted functions, and a location of the to be semi-statically adjusted function in a storage area. Further, the configuration file may further indicate a to be dynamically adjusted function in the to-be-adjusted functions.

In other words, the electronic device 100 may find, based on the configuration file, the to-be-adjusted function from all functions stored in the electronic device 100, implement semi-static adjustment, and find, from the to-be-adjusted functions, the to be dynamically adjusted function that needs to be monitored in the dynamic adjustment process. For specific descriptions of the to be semi-statically adjusted function and the to be dynamically adjusted function, refer to the related descriptions in FIG. 3.

In some implementations, the configuration file obtained by the electronic device 100 may be a configuration file selected by the electronic device 100 from a plurality of configuration files.

For example, when the electronic device 100 is a terminal device, the configuration file may be obtained by the electronic device 100 from the plurality of configuration files through screening based on user information. The user information may include one or more of the following: a gender, an age, an occupation, an account type, a historical browsing record, and the like. The user information may come from one or more of the following: information collected by a system, information collected by an application, information configured by a user, or the like. It should be understood that content included in the user information and a source of the user information are not limited in this embodiment of this application.

The user information may be related information of the user that uses the application, and includes information such as a gender, an age, an occupation, an account type, and a historical browsing record. The information may be information input by the user when the user registers an account on the application, or may be information input into a system by the user in a process of using the electronic device. A source of the information and content of the information are not limited in this embodiment of this application.

The screened-out configuration file is a file determined based on the user information, a use habit and a preference of the user that are analyzed for the application, and the like.

For example, when the electronic device 100 is a base station device, the configuration file may be obtained by the electronic device 100 from the plurality of configuration files through filtering based on the configuration information. The configuration information comes from one or more of the following: configuration information sent by an operator, preset configuration information, or the like. It should be understood that a source of the configuration information is not limited in this embodiment of this application.

It can be learned that different configuration files indicate different to be semi-statically adjusted functions and different to be dynamically adjusted functions. This is because different use habits and preferences for an application cause different service scenarios of the application when the user uses the application. However, when the application is in different service scenarios, call actions of the electronic device 100 for functions may be different. For example, for a livestreaming application, a user that performs livestreaming is in a livestreaming shooting scenario when using the livestreaming application, and a user that watches a livestream is in a video playback scenario when using the livestreaming application. When the livestreaming application is used in the livestreaming shooting scenario, the electronic device 100 usually needs to call a shooting-related function to implement livestreaming, and usually needs to call a video playback-related function to implement video playback in the video playback scenario. In this case, the electronic device 100 may determine, based on a type of an account used by a user to log in to the livestreaming application, whether the user is a user that performs livestreaming or a user that watches a livestream, and further adjust a location of a function in advance based on a call action of the function in a corresponding service scenario before the application is run.

The to be semi-statically adjusted function that is indicated by the configuration file may be a function with a call frequency whose change is less than a threshold, and further, a function with a call order whose change is less than a threshold (for example, a first value), in a process in which an initial service scenario (for example, a first service scenario) is changed to any other service scenario. Correspondingly, the to be dynamically adjusted function may be a function with a call frequency whose change is greater than a threshold (for example, a second value), and further, a function with a call order whose change is greater than a threshold, in a process in which the initial service scenario is changed to any other service scenario.

In the locations, indicated by the configuration file, of the to be semi-statically adjusted functions, if a location, indicated by the configuration file, of a specific function is a location with a relatively high access rate in the storage area or a location of a forward memory address, it indicates that the function has a relatively high call frequency or a forward call order in the initial service scenario; or if a location, indicated by the configuration file, of a specific function is a location with a relatively low access rate in the storage area or a location of a backward memory address, it indicates that the function has a relatively low call frequency or a backward call order in the initial service scenario.

The configuration file may be generated in the following three manners:
(1) In a development phase, the configuration file is obtained through testing a configuration of a call action of a function in a process in which a device runs a plurality of typical configurations of a service or an application.

The service or the application in different typical configurations is used to simulate different service scenarios in the running process of the service or the application. The electronic device 100 may generate configuration files of the service or the application in different typical configurations through testing the call action of the function in different typical configurations of the service or the application.

Specifically, in the development phase, the device may run in the plurality of typical configurations of the service or the application, and a plurality of trace files generated in a function call process by a processor in the device are obtained. The trace files may include an instruction trace file and/or a bus trace file. The instruction trace file is used to record the call action of the function, for example, a call time and a called function. The bus trace file is used to record an access address in an adjustment process of the function. The configuration file may be generated through analyzing the plurality of trace files. Specifically, a function recorded in all the trace files is the to-be-adjusted function. From a trace file generated in a typical configuration to a trace file generated in any other typical configuration, that a call action of the recorded function is stable means the to be semi-statically adjusted function that is indicated by the configuration file generated in the call configuration, and correspondingly, that a call action is unstable means the to be dynamically adjusted function that is indicated by the configuration file generated in the call configuration.

For example, there are three trace files. A trace file 1 records call actions of functions 1, 3, and 4; a trace file 2 records call actions of functions 3, 4, and 5; and a trace file 3 records call actions of functions 2 and 3. It can be learned from the three trace files that the function 1 to the function 5 are to-be-adjusted functions, the call actions of the functions 2 and 3 are relatively stable when the trace file 1 is compared with other trace files, the call actions of the functions 3 and 4 are relatively stable when the trace file 2 is compared with other trace files, and the call action of the function 3 is relatively stable when the trace file 3 is compared with other trace files. Therefore, in a generated configuration file in a typical configuration corresponding to the trace file 1, to be semi-statically adjusted functions are the functions 2 and 3, and to be dynamically adjusted functions are the functions 1, 4, and 5. In a generated configuration file in a typical configuration corresponding to the trace file 2, to be semi-statically adjusted functions are the functions 3 and 4, and to be dynamically adjusted functions are the functions 1, 2, and 5. In a generated configuration file in a typical configuration corresponding to the trace file 3, a to be semi-statically adjusted function is the function 3, and to be dynamically adjusted functions are the functions 1, 2, 4, and 5.

(2) The configuration file is obtained by the electronic device 100 through computing in a process in which the electronic device 100 runs a service or an application.

The electronic device 100 may monitor a function call action of the electronic device 100 in a process of running the service or the application, to obtain the configuration file through analysis. For generation of the configuration file, refer to the process of generating the configuration file in the manner 1.

In this case, the electronic device 100 is in a function collection phase in an early stage of a process of running the service, obtains the function call action in a process in which the electronic device 100 runs the service, obtains the configuration file through analysis based on the function call action, and then adjusts a location of the function based on the configuration file.

(3) The configuration file is obtained through configuration based on experience of a developer.

The developer may configure the configuration file based on development experience, and manually determine the to-be-adjusted function, the to be semi-statically adjusted function, the location of the to be semi-statically adjusted function in the storage area, and the like.

It can be learned that the configuration files generated in the manner 1 and the manner 3 are files preset in the electronic device 100, and the configuration file in the manner 2 is a file generated by the electronic device 100. It may be understood that the configuration file may be alternatively generated in another manner. In addition, the electronic device 100 may generate the configuration file in combination with the plurality of foregoing manners. For example, in addition to analyzing the configuration file through testing a call action of a device in a development phase, the developer may further improve the configuration file with reference to the experience of the developer. A manner of generating the configuration file is not limited in this embodiment of this application.

In some other implementations, the configuration file obtained by the electronic device 100 does not need to be determined through screening. In this case, for any user, when the electronic device 100 runs a same service or application, configuration files obtained by the electronic device 100 are a same configuration file.

In any change of the to be semi-statically adjusted function that is indicated by the configuration file in the service scenario of the service or the application, change of a call frequency of the to be semi-statically adjusted function is less than a threshold (for example, a third value), and further, change of a call order of the function is also less than a threshold. Correspondingly, in any change of the to be dynamically adjusted function that is indicated by the configuration file in the service scenario of the service or the application, change of a call frequency of the to be dynamically adjusted function is greater than a threshold (for example, a fourth value), and further, change of a call order of the function is also greater than a threshold.

In the locations, indicated by the configuration file, of the to be semi-statically adjusted functions, if a location, indicated by the configuration file, of a specific function is a location with a relatively high access rate in the storage area or a location of a forward memory address, it indicates that the function has a relatively high call frequency or a forward call order in any service scenario; or if a location, indicated by the configuration file, of a specific function is a location with a relatively low access rate in the storage area or a location of a backward memory address, it indicates that the function has a relatively low call frequency or a backward call order in any service scenario.

It can be learned that, when the electronic device 100 performs semi-static adjustment by using the configuration file, the service scenario of the service or the application when the service or the application is started does not need to be considered, and to-be-adjusted functions of the electronic device 100 are functions with basically same call frequencies and basically same call orders in any service scenario.

Similar to the configuration file mentioned in the foregoing implementation, the configuration file mentioned in this implementation may also be generated in the following three manners:
(1) In a development phase, the configuration file is obtained through testing a configuration of a call action of a function in a process in which a device runs a plurality of typical configurations of a service or an application.

For a description process thereof, correspondingly refer to the principle of generating the configuration file mentioned in the foregoing manner 1. A difference is that the configuration file mentioned in this implementation is a file generated based on the plurality of trace files. Specifically, a function recorded in all the trace files is the to-be-adjusted function, a function whose call action is stable in all the trace files is the to be semi-statically adjusted function, and correspondingly, a function whose call action is unstable in all the trace files is the to be dynamically adjusted function.

For example, there are three trace files. A trace file 1 records call actions of functions 1, 3, and 4; a trace file 2 records call actions of functions 3, 4, and 5; and a trace file 3 records call actions of functions 2 and 3. It can be learned from the three trace files that the function 1 to the function 5 are to-be-adjusted functions, and all the trace files record the call action of the function 3. Therefore, the function 3 is a to be semi-statically adjusted function, and other functions, including the functions 1, 2, 4, and 5, are all to be dynamically adjusted functions.

(2) The configuration file is obtained by the electronic device 100 through computing in a process in which the electronic device 100 runs a service.

(3) The configuration file is obtained through configuration based on experience of a developer.

It may be understood that for other content that is not described in detail, reference may be made to the foregoing same content. Details are not described herein again.

S202: The electronic device 100 determines a to-be-adjusted function based on the configuration file.

The electronic device 100 may find the to-be-adjusted function based on a file such as a dynamic library or a basic bin file in the configuration file.

In some embodiments, the configuration file may further include version information, and the version information is used to indicate a specified version of a file (for example, a dynamic library or a basic bin file) including the to-be-adjusted function. In this way, the electronic device 100 may adjust a location of a function in the specified version of the file.

S203: The electronic device 100 reads the to-be-adjusted function into the storage area.

The electronic device 100 may read the to-be-adjusted function into the storage area of the electronic device 100, so that a process in the electronic device 100 can call the to-be-adjusted function to execute the corresponding service. Storage space of a low-speed storage area is greater than storage space of a high-speed storage area. Initially, before executing the service, the electronic device 100 may read, by default, all to-be-adjusted functions into the low-speed storage area with relatively large storage space, for example, read the to-be-adjusted functions into aDDR.

S204: The electronic device 100 adjusts, to the location indicated by the configuration file in the storage area, the to be semi-statically adjusted function in the to-be-adjusted function.

Specifically, the electronic device 100 may adjust, to specified locations in the storage area based on the configuration file, different functions in to be semi-statically adjusted functions.

In some implementations, the configuration file may describe a storage area corresponding to each to be semi-statically adjusted function, and an arrangement order of functions in one storage area. Table 1 shows an example of to be semi-statically adjusted functions described in a configuration file.

**Table 1**

| Configuration file | |
|---|---|
| Storage area | To be semi-statically adjusted functions |
| L1 | F1, F2, and F5 |
| L2 | F3, F6, F7, and F8 |
| DDR | F4, F9, and F0 |

It can be learned from Table 1 that the configuration file indicates that the functions F1, F2, and F5 are located in L1. The electronic device 100 may store these functions in an order of F1, F2, and F5 at locations used for storing the functions in L1. Similarly, the electronic device 100 may store these functions in an order of F3, F6, F7, and F8 at locations used for storing the functions in L2, and store these functions in an order of F4, F9, and F0 at locations used for storing the functions in the DDR.

In some other embodiments, the configuration file may also describe only a location relationship between the to be semi-statically adjusted functions. When the electronic device 100 uses a hierarchical memory architecture, the electronic device 100 may sequentially store these functions level by level based on a size of storage space that is used for storing the functions and that is reserved in each level of storage area in a hierarchical memory. When the electronic device 100 includes only one storage area used for storing these functions, the electronic device 100 may sequentially store these functions in a reserved storage range used for storing these functions in the storage area. When the electronic device 100 includes a plurality of storage areas with a same access rate, the electronic device 100 sequentially stores these functions in a plurality of storage areas according to a read order of the storage areas.

In addition, it should be noted that, when the electronic device 100 uses the hierarchical memory architecture, and storage space of the low-speed storage area is relatively large, the electronic device 100 may complete location adjustment of the to be semi-statically adjusted functions, in a manner of copying, to a corresponding storage area, a function that is in the to be semi-statically adjusted functions and that needs to be adjusted to another storage area. In other words, the complete to-be-adjusted function is still placed in the low-speed storage area. In this way, in a dynamic adjustment phase, for a function that needs to be moved from the high-speed storage area to the low-speed storage area, the function in the high-speed storage area may be directly deleted, and the reserved function in the to-be-adjusted function is used as the function moved to the low-speed storage area, thereby reducing trouble of moving the function across storage areas.

It can be learned that the adjusted location, indicated by the configuration file, of the function is determined based on a call status of the function in a predicted service scenario. Specifically, the following two cases may be included:
(1) In the predicted service scenario, for functions with different call frequencies, after semi-static adjustment, a function with a higher call frequency has a higher access rate at a storage location of the function, or a smaller address of a storage location of the function.

For example, it is assumed that when starting a service or an application, the electronic device 100 determines that a service scenario is a first service scenario, and the to be semi-statically adjusted function may include a first function and a second function. The first function and the second function are functions called in the first service scenario. In addition, in the first service scenario, a call frequency of the first function is higher than a call frequency of the second function. In this case, the electronic device 100 may adjust a storage location of the first function to a first location in the storage area, and adjust a storage location of the second function to a second location in the storage area. An address of the first location is less than an address of the second location, or an access rate of the first location is higher than an access rate of the second location.

(2) In the predicted service scenario, for functions with a same call frequency, after semi-static adjustment, a function with a more forward call order has a smaller address of a storage location of the function.

The to be semi-statically adjusted function may further include a fifth function and a sixth function. The fifth function and the sixth function are functions called in the first service scenario. In addition, in the first service scenario, a call frequency of the fifth function is the same as a call frequency of the sixth function, and the fifth function is called before the sixth function. In this case, the electronic device 100 may adjust a storage location of the fifth function to a fifth location in the storage area, and adjust a storage location of the sixth function to a sixth location in the storage area. An address of the fifth location may be less than an address of the sixth location.

S205: The electronic device 100 updates symbol information and relocation information of the to be semi-statically adjusted function, and performs instruction relocation based on updated information.

The symbol information may include information such as a type, a name, an address, and a size of a function. The relocation information indicates a location that needs to be modified and a modification method in the function that are determined after the location of the function is determined. The electronic device 100 may modify an instruction by using the modification method indicated by the relocation information and based on the symbol information and the relocation information of the to be semi-statically adjusted function, to load the to be semi-statically adjusted function after location adjustment.

When reading, into the low-speed storage area, the to-be-adjusted function including the to be semi-statically adjusted function, the electronic device 100 may create a function structure to store the symbol information and the relocation information of the to-be-adjusted function. After the electronic device 100 changes the location of the to be semi-statically adjusted function, the symbol information and the relocation information of the to be semi-statically adjusted function may be updated. In this way, after the storage location of the to be semi-statically adjusted function is changed, the electronic device 100 can still call the to be semi-statically adjusted function.

In some implementations, the electronic device 100 may further maintain a symbol table in an operating system. After the electronic device 100 updates the location of the to be semi-statically adjusted function, the electronic device 100 may update the symbol table. The symbol table records symbol information and a symbol address. The electronic device 100 may determine the symbol address based on the adjusted address of the to be semi-statically adjusted function in the storage area, and update, into the symbol table, the symbol address and the symbol information of the to be semi-statically adjusted function.

It should be noted that, for two functions in a sequential call relationship that are at storage locations with a relatively long distance therebetween after adjustment, when the electronic device 100 calls a function by using the other function of the two functions, a case in which the function cannot be called because the distance exceeds a range may occur. For example, the electronic device 100 needs to call the function 2 by using the function 1. After the electronic device 100 performs semi-static adjustment, the function 1 is located in the DDR, and the function 2 is located in L1. When the function 1 calls the function 2, a distance between addresses of the two functions is relatively long, the function 1 cannot call the function 2 through a short jump.

In this case, a shadow function may be added to a tail of code of the function 1, and a long jump exists in the shadow function. When the function 1 calls the function 2, a jump to the shadow function may be first implemented, and then the function 2 may be called by using the shadow function, so that the function 1 calls the function 2. In other words, after adjustment, when a call cannot be implemented because an excessively long distance between a calling function and a called function, an intermediate jump function may be added for the calling function by default, so that the calling function can call the called function through a jump implemented by using the intermediate jump function. Alternatively, a compiler may be optimized, so that the compiler can support a crossfunction long call of code, thereby avoiding addition of a shadow function for a function and resolving performance overheads caused because a short jump exceeds a range.

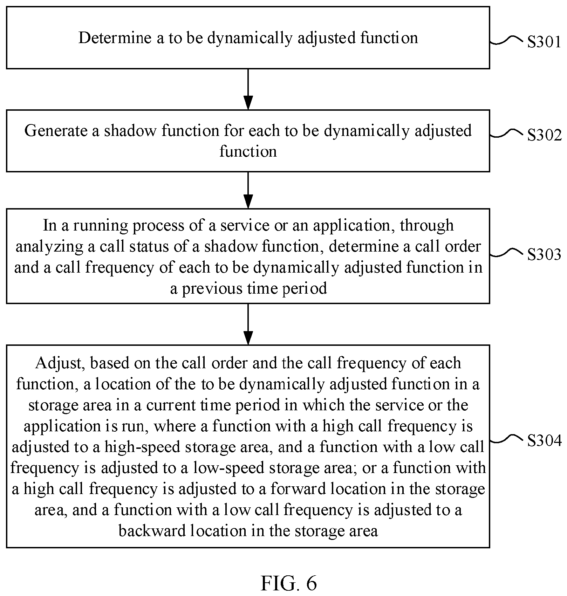

FIG. 6 is a schematic flowchart of dynamic adjustment for a function according to an embodiment of this application.

As shown in FIG. 6, the dynamic adjustment may include the following steps.

S301: An electronic device 100 determines a to be dynamically adjusted function.

The to be dynamically adjusted function may be a part or all of functions other than a to be semi-statically adjusted function in the foregoing to-be-adjusted functions. A call action of the electronic device 100 for the to be dynamically adjusted function changes with a scenario of a service executed by the electronic device 100. In other words, the electronic device 100 needs to analyze in real time the call action of the to be dynamically adjusted function in different service scenarios, to adjust a storage location of the to be dynamically adjusted function.

In addition, it should be noted that the to be dynamically adjusted function may also be all functions that may be executed by the electronic device 100 in a process of executing the service. In this case, the electronic device 100 does not need to perform semi-static adjustment, and directly dynamically adjust the function in the electronic device 100 in the process in which the electronic device 100 executes the service.

S302: The electronic device 100 generates a shadow function for each to be dynamically adjusted function.

The shadow function is essentially a string of code. When a previous function calls a current function, the shadow function can be used to implement "transition". In this way, the previous function calls the shadow function, and then calls the current function by using the shadow function.

In this embodiment of this application, the shadow function has the following two functions:
(1) After a location of a function is adjusted, the function can still be called successfully.

This is equivalent to that the shadow function can be used to implement transition. In specific implementation, a jump instruction in the shadow function may be modified, so that the previous function can still call the current function after a location of the current function is adjusted.

It should be noted that the shadow function can be used to reduce a relocation workload after the location of the function is adjusted, and avoid an atomicity problem of instruction modification in multi-core code sharing. Functions 1, 2, and 3 are used as an example. It is assumed that both the function 1 and the function 2 need to call the function 3. After a location of the function 3 is adjusted, if no shadow function is introduced, relocation information of the function 1 to the function 3 and the function 2 to the function 3 needs to be modified. In this way, when the function 1 and the function 2 call the function 3, the modified location of the function 3 can be called. If a shadow function is introduced, when the function 1 and the function 2 call the function 3, the same shadow function is called, and then the function 3 is called by using the shadow function. After the location of the function 3 is adjusted, a call from the function 1 and the function 2 to the function 3 can be implemented only through modifying relocation information from the shadow function to the function 3.

(2) A call action for a function is analyzed.

In a function call process, a quantity of function call times may be calculated through collecting statistics of a quantity of shadow function call times, and a function call order may be determined based on a function that calls a shadow function and a function that is called by the shadow function. In other words, the call action of the function may be analyzed based on a call status of the added shadow function.

As mentioned in the foregoing configuration file, a call action of a function is analyzed by obtaining a trace file, where the trace file records call statuses of a large quantity of functions, and an analysis workload is relatively large. In comparison, it should be noted that a calculation amount in an analysis process can be reduced and efficiency of analyzing the call action of the function can be improved by generating a shadow function specifically for a to be dynamically adjusted function and analyzing the call action of the function based on a call status of the shadow function. In addition, it may be further understood that using the shadow function increases overheads of the electronic device 100. When a service or an application is started, some functions are adjusted through semi-static adjustment, so that a quantity of shadow functions generated during dynamic adjustment can be reduced, thereby reducing impact caused by the shadow function, improving system performance, and shortening a dynamic adjustment time in a service execution process.

S303: In a running process of a service or an application, through analyzing the call status of the shadow function, the electronic device 100 determines a call order and a call frequency of each to be dynamically adjusted function in a previous time period.

The service may be any one or more services configured in the electronic device 100, for example, 2G, 3G, 4G, and 5G. In a service running process, a service scenario of the service may change due to a change of configuration information. Consequently, the call action of the electronic device 100 for the to be dynamically adjusted function changes.

The application is any application installed on the electronic device 100, for example, an entertainment application or a game application. In an application running process, a service scenario of the application may change due to an operation of a user. Consequently, the call action of the electronic device 100 for the to be dynamically adjusted function changes.

To ensure as much as possible that a function with a relatively high call frequency can be accessed more quickly in a process in which the electronic device 100 runs the service or the application, because configuration of the service does not change greatly in adjacent periods of time, the electronic device 100 may adjust, in a time period, the function to be dynamically called, through analyzing the call action for the to be dynamically adjusted function in a previous time period in the running process of the service or the application.

The time period may be a value preset by a developer in advance. The time period may have the following two cases:
(1) The time period is a fixed value.

For example, the time period may be fixed at 1s. In other words, in the process in which the electronic device 100 runs the service or the application, the electronic device 100 may refresh, at intervals of 1s, the location of the to be dynamically adjusted function.

(2) The time period is a dynamically changing value.

The time period may dynamically change according to one or more factors such as time, CPU usage, and the service or the application run by the electronic device 100. A browser game is used as an example. When the time period dynamically changes according to time, analysis is performed based on a large function to obtain that there are a relatively small quantity of users who play games online in the daytime, a network is not prone to congestion, and an execution speed of the browser game is relatively high, that is, the time period may be 1s; and there are a relatively large quantity of users who play games online in the evening, a network is prone to congestion, and an execution speed of the browser game is relatively low, that is, the time period may be 2s. Alternatively, when the time period dynamically changes according to CPU usage, and the CPU usage is relatively high, a refresh frequency of the location of the to be dynamically adjusted function can be appropriately reduced, to reduce a CPU workload. The time period can be 1s. When the CPU usage is low, a refresh frequency of the location of the to be dynamically adjusted function can be appropriately increased, to ensure that the location of the function can be correctly placed.

Through analyzing a call status of the shadow function in one time period, the electronic device 100 may determine a call action for the to be dynamically adjusted function in the time period. The call action includes a call order and a call frequency of each to be dynamically adjusted function. For example, if the shadow function of the function 1 is called for N times, that is, the function 1 is called for N times, the function 1 calls the shadow function, and the shadow function calls the function 2. In this case, the function 2 is called after the function 1.

S304: The electronic device 100 adjusts, based on the call order and the call frequency of each function, a location of the to be dynamically adjusted function in a storage area in a current time period in which the service or the application is run. A function with a high call frequency is adjusted to a high-speed storage area, and a function with a low call frequency is adjusted to a low-speed storage area. Alternatively, a function with a high call frequency is adjusted to a forward location in the storage area, and a function with a low call frequency is adjusted to a backward location in the storage area.

In a process of adjusting a to be dynamically adjusted function, the following two cases may occur:
(1) The electronic device 100 may need to adjust only a part of the to be dynamically adjusted functions.

For example, it is assumed that the function 1 in the to be dynamically adjusted functions has a relatively high call frequency, and a storage location of the function 1 is in the high-speed storage area. However, during a previous time of dynamic adjustment, the function 1 is already located in the high-speed storage area, and the function 1 does not need to be adjusted in this time of adjustment.

(2) The electronic device 100 needs to adjust a function other than the to be dynamically adjusted function.

This is because an original location of a function may be vacant after the location of the function is adjusted, causing a waste of storage space. To avoid this case, after the function is moved, functions stored after the function may be sequentially moved forward, to avoid a waste of storage space. Alternatively, when a function needs to be adjusted to be between two functions, because there is originally no vacant storage area between the two functions, a following function in the two functions and all following functions need to be sequentially moved backward, so that the function to be adjusted is moved to be between the two functions.

In addition, in some embodiments, for functions with a same call frequency, the electronic device 100 may adjust, according to a call order, a function that is called first to a storage location with a relatively small address in the storage area, and a function that is called later to a storage location with a relatively large address in the storage area.

It can be learned that, in a dynamic adjustment process of the electronic device 100, function adjustment may mainly include the following two cases:
(1) For functions with different call frequencies, after dynamic adjustment, a function with a higher call frequency has a higher access rate at a storage location of the function, or a smaller address of a storage location of the function.

For example, it is assumed that the to be dynamically adjusted function may include a third function and a fourth function. When the electronic device 100 detects that a call frequency of the third function is higher than a call frequency of the fourth function, the electronic device 100 may adjust a storage location of the third function to a third location in the storage area, and adjust a storage location of the fourth function to a fourth location in the storage area. An address of the third location is less than an address of the fourth location, or an access rate of the third location is higher than an access rate of the fourth location.

(2) For functions with a same call frequency, after dynamic adjustment, a function with a more forward call order has a smaller address of a storage location of the function.

The to be dynamically adjusted function may further include a seventh function and an eighth function. When the electronic device 100 detects that a call frequency of the seventh function is the same as a call frequency of the eighth function, and the seventh function is called before the eighth function, the electronic device 100 may adjust a storage location of the seventh function to a seventh location in the storage area, and adjust a storage location of the eighth function to an eighth location in the storage area. An address of the seventh location may be less than an address of the eighth location.

To facilitate understanding of a function adjustment process, the following describes the dynamic adjustment process in detail with reference to FIG. 7 by using an example in which a hierarchical memory of the electronic device 100 includes two storage areas: a high-speed storage area and a low-speed storage area. Specifically, FIG. 7 is a schematic flowchart of a function adjustment process. As shown in FIG. 7, adjustment performed the electronic device 100 for a to be dynamically adjusted function specifically includes the following steps:

S401: The electronic device 100 determines, in the high-speed storage area, a function that needs to be adjusted.

In the high-speed storage area, the function that needs to be adjusted includes one or more of the following: a function that needs to be moved to the low-speed storage area, and a function whose location in the high-speed storage area needs to be adjusted. The former function may be a function whose call frequency decreases in a current service scenario relative to a previous service scenario. The latter function is a function whose call order changes in the current service scenario relative to the previous service scenario.

S402: The electronic device 100 determines, as functions that need to be moved, a first function that needs to be adjusted in the high-speed storage area and all following functions.

To efficiently use storage space in the high-speed storage area, after finding the first function that needs to be adjusted in the high-speed storage area, the electronic device 100 determines the first function and all the following functions as the functions that need to be moved. During function adjustment, the electronic device 100 needs to move all the functions that need to be moved.

S403: The electronic device 100 moves, to the low-speed storage area, each function that needs to be moved, and modifies a jump of a shadow function corresponding to the function, so that the shadow function can jump to the function located in the low-speed storage area.

To be specific, the electronic device 100 first moves, to the low-speed storage area, all functions that need to be moved. After the moving, to ensure that the moved functions can still be normally called, shadow functions corresponding to these functions need to be synchronously modified. In this way, when the electronic device 100 needs to call the functions that are moved to the low-speed storage area, the electronic device 100 can successfully call, by using the shadow functions, the functions that are moved to the low-speed storage area.

S404: The electronic device 100 moves, to the high-speed storage area according to an adjusted order, functions that need to be adjusted to the high-speed storage area, and modifies jumps of shadow functions corresponding to the functions, so that the shadow functions can jump to the functions located in the high-speed storage area.

After the moving to the low-speed storage area, the electronic device 100 adjusts, to the high-speed storage area according to an order of the functions that need to be placed in the high-speed storage area, the functions that need to be moved to the high-speed memory. In addition, after the moving, to ensure that the moved functions can still be normally called, shadow functions corresponding to these functions need to be synchronously modified. In this way, when the electronic device 100 needs to call the functions that are moved to the high-speed storage area, the electronic device 100 can successfully call, by using the shadow functions, the functions that are moved to the high-speed storage area.

In addition, it should be noted that, if a copy of a to-be-adjusted function is reserved in the low-speed storage area, when performing step S403, the electronic device 100 does not need to move, to the low-speed storage area, the function that needs to be moved in the high-speed storage area, and only needs to delete the function that needs to be moved in the high-speed storage area, and modify the jump of the shadow function corresponding to the function that needs to be moved, so that a jump to the function that needs to be moved and that is originally reserved in the copy in the low-speed storage area can be implemented by using the shadow function. Further, in step S404, when the function in the low-speed storage area needs to be moved to the high-speed storage area, a copy of the function that needs to be moved may be moved to the high-speed storage area in a copying manner, so that the complete to-be-adjusted function can still be reserved in the low-speed storage area.

In addition, before the electronic device 100 moves, to the high-speed storage area, the function that needs to be adjusted to the high-speed storage area, the electronic device 100 needs to ensure that execution of all original functions in the high-speed storage area has been completed. In this way, the function that needs to be adjusted to the high-speed storage area can be safely moved to the high-speed storage area, to avoid a case in which the electronic device 100 stores a function in the high-speed storage area when the electronic device 100 reads the function into the high-speed storage area. The electronic device 100 may determine whether a currently executed service enters a task with a lowest priority, to determine whether execution of an original function in the high-speed storage area is completed. If the currently executed service enters the task with the lowest priority, execution of the original function in the high-speed storage area is completed; or otherwise, execution is not completed. Step S404 can be performed only when the currently executed service enters the task with the lowest priority.

In some implementations, a phenomenon that an illegal instruction is abnormal is, for example, as follows: An instruction of the next function 2 is pre-fetched in a process of executing the function 1, and when the function 3 is adjusted to a location of the function 2, an instruction in a modification process is pre-fetched in the process of executing the function 1, and an illegal instruction exception occurs. In this case, a cache locking technology or an exception handling technology may be used before function adjustment, to ensure normal code execution.

It may be understood that, in a process in which the electronic device 100 runs a service or an application, the electronic device 100 may periodically perform steps S303 and S304, and dynamically adjust locations of these functions in the storage area based on call statuses of the functions. In addition, when the electronic device 100 switches to another service or another application, the electronic device 100 may also dynamically call a function related to the service or the application, so that the electronic device 100 dynamically adjusts locations of functions in the storage area based on different services or applications.

It can be learned that, according to the method for adjusting a program storage location provided in this embodiment of this application, cross dynamic library optimization can be implemented, and an order of functions in a plurality of dynamic libraries can be set again. In addition, in the method, the functions in the storage area can be dynamically adjusted at a fine granularity based on a service scenario, thereby improving space utilization of the high-speed storage area and improving service running efficiency.

FIG. 8 is a schematic flowchart of a method for adjusting a program storage location of a variable according to an embodiment of this application.

As shown in FIG. 8, the method for adjusting a program storage location may include the following steps.

S501: An electronic device 100 determines a service scenario of a service or an application.

Call frequencies and a call order of variables called by the electronic device 100 may vary with service scenarios. Before starting a service or an application, the electronic device 100 may determine a service scenario (for example, a first service scenario) of the service (for example, a first service) or the application (for example, a first application).

For example, when the electronic device 100 is a terminal device, the electronic device 100 may determine the service scenario of the application based on user information. The user information may include one or more of the following: a gender, an age, an occupation, an account type, a historical browsing record, and the like. The user information may come from one or more of the following: information collected by a system, information collected by an application, information configured by a user, or the like. It should be understood that content included in the user information and a source of the user information are not limited in this embodiment of this application.

For example, when the electronic device 100 is a base station device, the electronic device 100 may determine the service scenario of the service based on configuration information. The configuration information comes from one or more of the following: configuration information sent by an operator, preset configuration information, or the like. It should be understood that a source of the configuration information is not limited in this embodiment of this application.

S502: The electronic device 100 determines a configuration file based on the service scenario.

The electronic device 100 may select, through screening from a plurality of configuration files based on the determined service scenario, the configuration file corresponding to the service scenario. The configuration file indicates a to be semi-statically adjusted variable and a location of the to be semi-statically adjusted variable in a storage area.

The to be semi-statically adjusted variable that is indicated by the configuration file may be a variable with a call frequency whose change is less than a threshold in a process in which an initial service scenario, that is, the service scenario determined in step S501, is changed to another service scenario of the service or the application. In other words, a difference between a call frequency of the data to be semi-statically adjusted in any other service scenario of the service or the application and a call frequency determined by the electronic device 100 in the service scenario is less than a threshold.

The configuration file may be generated in the following three manners:
(1) In a development phase, the configuration file is obtained through testing a configuration of an access action of a variable in a process in which a device runs a plurality of typical configurations of a service or an application.
(2) The configuration file is obtained by the electronic device 100 through computing in a process in which the electronic device 100 runs a service or an application.
(3) The configuration file is obtained through configuration based on experience of a developer.

For a specific generation manner of the configuration file, refer to the foregoing generation manner of the configuration file in the semi-static adjustment process of the related function. Details are not described herein again.

S503: The electronic device 100 adjusts, based on the configuration file, the location of the to be semi-statically adjusted variable in the storage area.

Specifically, when starting the service or the application, the electronic device 100 may store each to be semi-statically adjusted variable at the location, indicated by the configuration file, in the storage area.

The storage area in the electronic device 100 may use the following two design solutions:
(1) The storage area in the electronic device 100 uses a hierarchical memory architecture.
(2) The electronic device 100 includes only one storage area or a plurality of storage areas with a same access rate, or the storage area uses a plurality of NUMA architectures.

For specific descriptions of the storage area, refer to related descriptions in step S101. Details are not described herein again.

In the locations, indicated by the configuration file, of the to be semi-statically adjusted variables, if a location, indicated by the configuration file, of a specific variable is a location with a relatively high access rate in the storage area or a location of a forward memory address, it indicates that the variable has a relatively high access frequency or a forward access order in the service scenario determined by the electronic device 100; or if a location, indicated by the configuration file, of a specific variable is a location with a relatively low access rate in the storage area or a location of a backward memory address, it indicates that the variable has a relatively low access frequency or a backward access order in the service scenario determined by the electronic device 100.

It should be noted that before adjusting, based on the configuration file, the location of the to be semi-statically adjusted variable in the storage area, the electronic device 100 may read, into the storage area in advance, the to be semi-statically adjusted variable from one or more binary executable files or library files, for example, a low-speed storage area, and then adjust, based on the configuration file, the location of the to be semi-statically adjusted variable in the storage area; or when reading, into the storage area, the to be semi-statically adjusted variable from one or more binary executable files or library files, the electronic device 100 may directly read the to be semi-statically adjusted variable into the location indicated by the configuration file.

It can be learned that the adjusted location, indicated by the configuration file, of the variable is determined based on a call status of the variable in a predicted service scenario. Specifically, the following two cases may be included:
(1) In the predicted service scenario, for variables with different call frequencies, after semi-static adjustment, a variable with a higher call frequency has a higher access rate at a storage location of the variable, or a smaller address of a storage location of the variable.

For example, it is assumed that when starting a service or an application, the electronic device 100 determines that a service scenario is a first service scenario, and the to be semi-statically adjusted variable may include a first variable and a second variable. The first variable and the second variable are variables called in the first service scenario. In addition, in the first service scenario, a call frequency of the first variable is higher than a call frequency of the second variable. In this case, the electronic device 100 may adjust a storage location of the first variable to a first location in the storage area, and adjust a storage location of the second variable to a second location in the storage area. An address of the first location is less than an address of the second location, or an access rate of the first location is higher than an access rate of the second location.

(2) In the predicted service scenario, for variables with a same call frequency, after semi-static adjustment, a variable with a more forward call order has a smaller address of a storage location of the variable.

The to be semi-statically adjusted variable may further include a fifth variable and a sixth variable. The fifth variable and the sixth variable are variables called in the first service scenario. In addition, in the first service scenario, a call frequency of the fifth variable is the same as a call frequency of the sixth variable, and the fifth variable is called before the sixth variable. In this case, the electronic device 100 may adjust a storage location of the fifth variable to a fifth location in the storage area, and adjust a storage location of the sixth variable to a sixth location in the storage area. An address of the fifth location may be less than an address of the sixth location.

S504: The electronic device 100 updates symbol information and relocation information of the to be semi-statically adjusted variable, and relocates the variable based on updated information.

The symbol information may include information such as a type, a name, an address, and a size of a variable. The relocation information indicates a location that needs to be modified and a modification method in the variable that are determined after the location of the variable is determined. The electronic device 100 may modify an initial value of the variable by using the modification method indicated by the relocation information and based on the symbol information and the relocation information of the to be semi-statically adjusted variable, to load the to be semi-statically adjusted variable after location adjustment.

When the electronic device 100 adjusts the location of the to be semi-statically adjusted variable, the symbol information and the relocation information of the to be semi-statically adjusted variable may be synchronously changed, so that the electronic device 100 can find a new location of the variable and determine a new initial value.

In other words, before running the service or the application, the electronic device 100 may adjust, in advance based on the configuration file, the location of the variable that needs to be called in the running process of the service or the application. Therefore, when the electronic device 100 runs a service scenario of the service or the application, a variable with a relatively high access frequency in the service scenario or with a forward access order can be called more quickly, thereby improving a speed of running the service or the application by the electronic device 100.

It may be understood that, for specific content that is not mentioned in the semi-static adjustment process of the variable, reference may be made to related descriptions of the semi-static adjustment of the function shown in FIG. 4 and FIG. 5. Details are not described herein again. In addition, the semi-static adjustment of the variable and the semi-static adjustment of the function may be separately performed, or may be simultaneously performed. To be specific, when the service or the application is started, locations of a function and a variable may be simultaneously adjusted, to implement location adjustment of the function and the variable based on a service scenario.

In addition, it should be noted that, after the electronic device 100 disables the service or the application, when the service or the application is restarted, the electronic device 100 may re-predict a service scenario, for example, a second service scenario, and adjust a function/variable, for example, a ninth function/ninth variable and a tenth function/tenth variable, based on the re-predicted service scenario. In this way, the electronic device 100 semi-statically adjusts a storage location of a function/variable more flexibly.

In conclusion, according to the method for adjusting a program storage location provided in this embodiment of this application, before the service or the application is run, the locations of the function and the variable that are needed in the running process of the service or the application may be adjusted in the storage area, and the function is dynamically adjusted in the running process of the service or the application, to improve a running speed of the service or the application as much as possible.

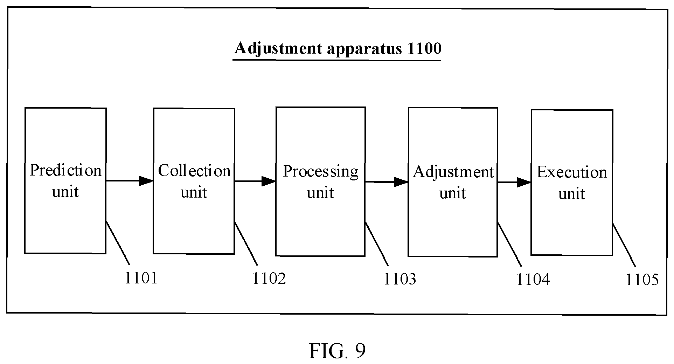

FIG. 9 is a diagram of a structure of an adjustment apparatus 1100 according to an embodiment of this application.

As shown in FIG. 9, the adjustment apparatus 1100 may include a prediction unit 1101, a collection unit 1102, a processing unit 1103, an adjustment unit 1104, and an execution unit 1105. Details are as follows:
The prediction unit 1101 may be configured to determine a service scenario executed by an electronic device 100. For example, when a service or an application is started, the prediction unit 1101 may determine the service scenario executed by the electronic device 100.

The collection unit 1102 may be configured to obtain a call frequency and a call order of a function in a process in which the electronic device 100 executes the service scenario.

The processing unit 1103 may be configured to generate a shadow function for the function. The shadow function may be used to record a call action of the function, and includes a call frequency of the function and a call order between the function and another function.

The adjustment unit 1104 may be configured to adjust a storage location of a function/variable. The adjustment unit 1104 may be configured to: before execution of the service scenario, adjust the storage location of the function/variable based on a call frequency of the function/variable and further with reference to a call order of the function/variable. Alternatively, the adjustment unit 1104 may be configured to: in the process of executing the service scenario, adjust the storage location of the function based on the call frequency of the function and further with reference to the call order of the function.

The execution unit 1105 may be configured to execute the service scenario.

It may be understood that the adjustment apparatus 1100 may further include more or fewer modules, and the foregoing modules may be further configured to perform other content. For detailed content, refer to related content of the electronic device 100. Details are not described herein again.

It should be understood that the steps in the foregoing method embodiments can be implemented by using a hardware integrated logic circuit of in a processor, or by using instructions in a form of software. The steps of the method disclosed with reference to embodiments of this application may be directly performed and completed by a hardware processor, or may be performed and completed through a combination of hardware in the processor and a software module.

This application further provides an electronic device. The electronic device may include a memory and a processor. The memory may be configured to store a computer program. The processor may be configured to call the computer program in the memory, so that the electronic device performs the method performed by the electronic device 100 in any one of the foregoing embodiments.

This application further provides a chip system. The chip system includes at least one processor, configured to implement functions in the method performed by the electronic device 100 in any one of the foregoing embodiments.

In a possible design, the chip system further includes a memory, the memory is configured to store program instructions and data, and the memory is located inside or outside the processor.

The chip system may include a chip, or may include a chip and another discrete component.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system-on-a-chip (system-on-a-chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

This application further provides a computer program product. The computer program product includes a computer program. When the computer program is run, a computer is enabled to perform the method performed by the electronic device 100 in any one of the foregoing embodiments.

This application further provides a computer-readable storage medium. The computer-readable storage medium stores a computer program. When the computer program is run, a computer is enabled to perform the method performed by the electronic device 100 in any one of the foregoing embodiments.

It should be noted that the processor in embodiments of this application may be an integrated circuit chip, and has a signal processing capability. In an implementation process, the steps in the foregoing method embodiments can be implemented by using a hardware integrated logic circuit in the processor, or by using instructions in a form of software. The foregoing processor may be a general-purpose processor, a digital signal processor (digital signal processor, DSP), an application-specific integrated circuit (Application-specific integrated circuit, ASIC), a field programmable gate array (field programmable gate array, FPGA) or another programmable logic device, a discrete gate or a transistor logic device, or a discrete hardware component. The processor may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed through a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

In addition, an embodiment of this application further provides an apparatus. The apparatus may be specifically a component or a module, and the apparatus may include one or more processors and memories that are connected to each other. The memory is configured to store a computer program. When the computer program is executed by one or more processors, the apparatus is enabled to perform the methods in the foregoing method embodiments.

The apparatus, the computer-readable storage medium, the computer program product, or the chip provided in embodiments of this application is configured to perform the corresponding method provided above. Therefore, for beneficial effect that can be achieved, refer to beneficial effect in the corresponding method provided above. Details are not described herein again.

The implementations of this application may be randomly combined to achieve different technical effect.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or the functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

A person of ordinary skill in the art may understand that all or a part of the processes of the methods in embodiments may be implemented by a computer program instructing related hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made in accordance with the disclosure of the present invention shall be included in the protection scope of the present invention.

## Claims

1. A method for adjusting a program storage location, wherein the method comprises:
determining a first service scenario;
adjusting a storage location of a first to-be-adjusted object to a first location, and adjusting a storage location of a second to-be-adjusted object to a second location, wherein the first to-be-adjusted object and the second to-be-adjusted object are respectively a first function and a second function that are called in the first service scenario, or the first to-be-adjusted object and the second to-be-adjusted object are respectively a first variable and a second variable that are called in the first service scenario; and in the first service scenario, a call frequency of the first to-be-adjusted object is higher than a call frequency of the second to-be-adjusted object, the first location and the second location are in a storage area of a computer device, and an address of the first location is less than an address of the second location or an access rate of the first location is higher than an access rate of the second location; and
executing the first service scenario.

2. The method according to claim 1, wherein the method further comprises:
obtaining call frequencies of a third function and a fourth function, wherein the third function and the fourth function are functions that are called after execution of the first service scenario starts, and the call frequency of the third function is higher than the call frequency of the fourth function; and
adjusting a storage location of the third function to a third location, and adjusting a storage location of the fourth function to a fourth location, wherein the third location and the fourth location are in the storage area of the computer device, and an address of the third location is less than an address of the fourth location or an access rate of the third location is higher than an access rate of the fourth location.

3. A method for adjusting a program storage location, wherein the method comprises:
executing a first service scenario;
obtaining call frequencies of a third function and a fourth function, wherein the third function and the fourth function are functions that are called after execution of the first service scenario starts, and the call frequency of the third function is higher than the call frequency of the fourth function; and
adjusting a storage location of the third function to a third location, and adjusting a storage location of the fourth function to a fourth location, wherein the third location and the fourth location are in a storage area of a computer device, and an address of the third location is less than an address of the fourth location or an access rate of the third location is higher than an access rate of the fourth location.

4. The method according to claim 3, wherein before the executing the first service scenario, the method further comprises:
adjusting a storage location of a first to-be-adjusted object to a first location, and adjusting a storage location of a second to-be-adjusted object to a second location, wherein the first to-be-adjusted object and the second to-be-adjusted object are respectively a first function and a second function that are called in the first service scenario, or the first to-be-adjusted object and the second to-be-adjusted object are respectively a first variable and a second variable that are called in the first service scenario; the first service scenario is a service scenario of a first service or a first application; and in any service scenario of the first service or the first application, a probability that a call frequency of the first to-be-adjusted object is higher than a call frequency of the second to-be-adjusted object is greater than a threshold, the first location and the second location are in the storage area of the computer device, and an address of the first location is less than an address of the second location or an access rate of the first location is higher than an access rate of the second location.

5. The method according to any one of claims 1, 2, and 4, wherein the adjusting the storage location of the first to-be-adjusted object to the first location, and adjusting the storage location of the second to-be-adjusted object to the second location specifically comprises:
based on a configuration file, adjusting the storage location of the first to-be-adjusted object to the first location, and adjusting the storage location of the second to-be-adjusted object to the second location, wherein the configuration file indicates the adjusted locations of the first to-be-adjusted object and the second to-be-adjusted object, and the configuration file is determined based on the call frequencies of the first to-be-adjusted object and the second to-be-adjusted object in a process of executing the first service scenario.

6. The method according to any one of claims 1 to 4, wherein the first service scenario is a service scenario comprised in at least one of 2G, 3G, 4G, and 5G services.

7. The method according to claim 2 or 4, wherein the first service scenario is the service scenario of the first service or the first application; and
differences between call frequencies of the first to-be-adjusted object and the second to-be-adjusted object in any other service scenario of the first service or the first application, and the call frequencies in the first service scenario are less than a first value, and differences between call frequencies of the third function and the fourth function in another service scenario of the first service or the first application, and the call frequencies in the first service scenario are greater than a second value; or
differences between call frequencies of the first to-be-adjusted object and the second to-be-adjusted object in any two service scenarios of the first service or the first application are less than a third value, and differences between call frequencies of the third function and the fourth function in any two service scenarios of the first service or the first application are greater than a fourth value.

8. The method according to any one of claims 1, 2, and 4, wherein
the access rate of the first location is higher than the access rate of the second location, wherein the first location is in a high-speed storage area, and the second location is in a low-speed storage area; or
the address of the first location is less than the address of the second location, wherein the first location is in a first storage area, the second location is in a second storage area, and an access rate of the first storage area is the same as an access rate of the second storage area; or the first location and the second location are in a same storage area.

9. The method according to any one of claims 1 to 4, wherein the method further comprises:
adjusting a storage location of a fifth to-be-adjusted object to a fifth location, and adjusting a storage location of a sixth to-be-adjusted object to a sixth location, wherein the fifth to-be-adjusted object and the sixth to-be-adjusted object are respectively a fifth function and a sixth function that are called in the first service scenario, or the fifth to-be-adjusted object and the sixth to-be-adjusted object are respectively a fifth variable and a sixth variable that are called in the first service scenario; and in the first service scenario, a call frequency of the fifth to-be-adjusted object is the same as a call frequency of the sixth to-be-adjusted object, the fifth to-be-adjusted object is called before the sixth to-be-adjusted object, the fifth location and the sixth location are in the storage area of the computer device, and an address of the fifth location is less than an address of the sixth location.

10. The method according to any one of claims 2 to 4, wherein
the access rate of the third location is higher than the access rate of the fourth location, wherein the third location is in a high-speed storage area, and the fourth location is in a low-speed storage area; or
the address of the third location is less than the address of the fourth location, wherein the third location is in a first storage area, the fourth location is in a second storage area, and an access rate of the first storage area is the same as an access rate of the second storage area; or the third location and the fourth location are in a same storage area.

11. The method according to any one of claims 2 to 4, wherein the obtaining the call frequencies of the third function and the fourth function specifically comprises:
obtaining the call frequencies of the third function and the fourth function in a first time period; and
the adjusting the storage location of the third function to the third location, and adjusting the storage location of the fourth function to the fourth location specifically comprises:
in the second time period, adjusting the storage location of the third function to the third location, and adjusting the storage location of the fourth function to the fourth location, wherein the second time period is an adjacent time period after the first time period.

12. The method according to any one of claims 1 to 4, wherein the method further comprises:
obtaining call frequencies and a call order of a seventh function and an eighth function, wherein the seventh function and the eighth function are functions that are called after execution of the first service scenario starts, the call frequency of the seventh function is the same as the call frequency of the eighth function, and the seventh function is called before the eighth function; and
adjusting a storage location of the seventh function to a seventh location, and adjusting a storage location of the eighth function to an eighth location, wherein the seventh location and the eighth location are in the storage area of the computer device, and an address of the seventh location is less than an address of the eighth location.

13. The method according to any one of claims 2 to 4, wherein before the obtaining the call frequencies of the third function and the fourth function, the method further comprises:
generating shadow functions for the third function and the fourth function, wherein the shadow function of the third function is used to record a call action of the third function, the recorded call action of the third function is used for determining the call frequency of the third function and a call order between the third function and another function, the shadow function of the fourth function is used to record a call action of the fourth function, and the recorded call action of the fourth function is used for determining the call frequency of the fourth function and a call order between the fourth function and another function.

14. The method according to any one of claims 1 to 4, wherein after execution of the first service scenario stops, the method further comprises:
determining a second service scenario;
adjusting a storage location of a ninth to-be-adjusted object to a ninth location, and adjusting a storage location of a tenth to-be-adjusted object to a tenth location, wherein the ninth to-be-adjusted object and the tenth to-be-adjusted object are respectively a ninth function and a tenth function that are called in the second service scenario, or the ninth to-be-adjusted object and the tenth to-be-adjusted object are respectively a ninth variable and a tenth variable that are called in the second service scenario; and in the second service scenario, a call frequency of the ninth to-be-adjusted object is higher than a call frequency of the tenth to-be-adjusted object, the ninth location and the tenth location are in the storage area of the computer device, an address of the ninth location is less than an address of the tenth location or an access rate of the ninth location is higher than an access rate of the tenth location, the second service scenario is different from the first service scenario, the ninth to-be-adjusted object is different from the first to-be-adjusted object; and the tenth to-be-adjusted object is different from the second to-be-adjusted object; and
executing the second service scenario.

15. An adjustment apparatus, comprising: a prediction unit, an adjustment unit, and an execution unit, wherein
the prediction unit is configured to determine a first service scenario;
the adjustment unit is configured to adjust a storage location of a first to-be-adjusted object to a first location, and adjust a storage location of a second to-be-adjusted object to a second location, wherein the first to-be-adjusted object and the second to-be-adjusted object are respectively a first function and a second function that are called in the first service scenario, or the first to-be-adjusted object and the second to-be-adjusted object are respectively a first variable and a second variable that are called in the first service scenario; and in the first service scenario, a call frequency of the first to-be-adjusted object is higher than a call frequency of the second to-be-adjusted object, the first location and the second location are in a storage area of the adjustment apparatus, and an address of the first location is less than an address of the second location or an access rate of the first location is higher than an access rate of the second location; and
the execution unit is configured to execute the first service scenario.

16. The adjustment apparatus according to claim 15, wherein the adjustment apparatus further comprises a collection unit;
the collection unit is configured to obtain call frequencies of a third function and a fourth function, wherein the third function and the fourth function are functions that are called after execution of the first service scenario starts, and the call frequency of the third function is higher than the call frequency of the fourth function; and
the adjustment unit is further configured to adjust a storage location of the third function to a third location, and adjust a storage location of the fourth function to a fourth location, wherein the third location and the fourth location are in the storage area of the adjustment apparatus, and an address of the third location is less than an address of the fourth location or an access rate of the third location is higher than an access rate of the fourth location.

17. An adjustment apparatus, wherein the adjustment apparatus comprises an execution unit, a collection unit, and an adjustment unit;
the execution unit is configured to execute a first service scenario;
the collection unit is configured to obtain call frequencies of a third function and a fourth function, wherein the third function and the fourth function are functions that are called after execution of the first service scenario starts, and the call frequency of the third function is higher than the call frequency of the fourth function; and
the adjustment unit is configured to adjust a storage location of the third function to a third location, and adjust a storage location of the fourth function to a fourth location, wherein the third location and the fourth location are in a storage area of the adjustment apparatus, and an address of the third location is less than an address of the fourth location or an access rate of the third location is higher than an access rate of the fourth location.

18. The adjustment apparatus according to claim 17, wherein
the adjustment unit is further configured to: before the first service is executed, adjust a storage location of a first to-be-adjusted object to a first location, and adjust a storage location of a second to-be-adjusted object to a second location, wherein the first to-be-adjusted object and the second to-be-adjusted object are respectively a first function and a second function that are called in the first service scenario, or the first to-be-adjusted object and the second to-be-adjusted object are respectively a first variable and a second variable that are called in the first service scenario; the first service scenario is a service scenario of a first service or a first application; and in any service scenario of the first service or the first application, a probability that a call frequency of the first to-be-adjusted object is higher than a call frequency of the second to-be-adjusted object is greater than a threshold, the first location and the second location are in the storage area of the adjustment apparatus, and an address of the first location is less than an address of the second location or an access rate of the first location is higher than an access rate of the second location.

19. The adjustment apparatus according to any one of claims 15, 16, and 18, wherein when the adjustment unit adjusts the storage location of the first to-be-adjusted object to the first location, and adjusts the storage location of the second to-be-adjusted object to the second location, the adjustment unit is specifically configured to:
based on a configuration file, adjust the storage location of the first to-be-adjusted object to the first location, and adjust the storage location of the second to-be-adjusted object to the second location, wherein the configuration file indicates the adjusted locations of the first to-be-adjusted object and the second to-be-adjusted object, and the configuration file is determined based on the call frequencies of the first to-be-adjusted object and the second to-be-adjusted object in a process of executing the first service scenario.

20. The adjustment apparatus according to any one of claims 15 to 18, wherein the first service scenario is a service scenario comprised in at least one of 2G, 3G, 4G, and 5G services.

21. The adjustment apparatus according to claim 16 or 18, wherein the first service scenario is the service scenario of the first service or the first application; and
differences between call frequencies of the first to-be-adjusted object and the second to-be-adjusted object in any other service scenario of the first service or the first application, and the call frequencies in the first service scenario are less than a first value, and differences between call frequencies of the third function and the fourth function in another service scenario of the first service or the first application, and the call frequencies in the first service scenario are greater than a second value; or
differences between call frequencies of the first to-be-adjusted object and the second to-be-adjusted object in any two service scenarios of the first service or the first application are less than a third value, and differences between call frequencies of the third function and the fourth function in any two service scenarios of the first service or the first application are greater than a fourth value.

22. The adjustment apparatus according to any one of claims 15, 16, and 18, wherein
the access rate of the first location is higher than the access rate of the second location, wherein the first location is in a high-speed storage area, and the second location is in a low-speed storage area; or
the address of the first location is less than the address of the second location, wherein the first location is in a first storage area, the second location is in a second storage area, and an access rate of the first storage area is the same as an access rate of the second storage area; or the first location and the second location are in a same storage area.

23. The adjustment apparatus according to any one of claims 15 to 18, wherein
the adjustment unit is further configured to: after the first service scenario is determined, before the first service scenario is executed, adjust a storage location of a fifth to-be-adjusted object to a fifth location, and adjust a storage location of a sixth to-be-adjusted object to a sixth location, wherein the fifth to-be-adjusted object and the sixth to-be-adjusted object are respectively a fifth function and a sixth function that are called in the first service scenario, or the fifth to-be-adjusted object and the sixth to-be-adjusted object are respectively a fifth variable and a sixth variable that are called in the first service scenario; and in the first service scenario, a call frequency of the fifth to-be-adjusted object is the same as a call frequency of the sixth to-be-adjusted object, the fifth to-be-adjusted object is called before the sixth to-be-adjusted object, the fifth location and the sixth location are in the storage area of the computer device, and an address of the fifth location is less than an address of the sixth location.

24. The adjustment apparatus according to any one of claims 16 to 18, wherein
the access rate of the third location is higher than the access rate of the fourth location, wherein the third location is in a high-speed storage area, and the fourth location is in a low-speed storage area; or
the address of the third location is less than the address of the fourth location, wherein the third location is in a first storage area, the fourth location is in a second storage area, and an access rate of the first storage area is the same as an access rate of the second storage area; or the third location and the fourth location are in a same storage area.

25. The adjustment apparatus according to any one of claims 16 to 18, wherein when the collection unit obtains the call frequencies of the third function and the fourth function, the collection unit is specifically configured to:
obtain the call frequencies of the third function and the fourth function in a first time period; and
when the adjustment unit adjusts the storage location of the third function to the third location, and adjusts the storage location of the fourth function to the fourth location, the adjustment unit is specifically configured to:
in the second time period, adjust the storage location of the third function to the third location, and adjust the storage location of the fourth function to the fourth location, wherein the second time period is an adjacent time period after the first time period.

26. The adjustment apparatus according to any one of claims 15 to 18, wherein
the collection unit is further configured to obtain call frequencies and a call order of a seventh function and an eighth function, wherein the seventh function and the eighth function are functions that are called after execution of the first service scenario starts, the call frequency of the seventh function is the same as the call frequency of the eighth function, and the seventh function is called before the eighth function; and
the adjustment unit is configured to adjust a storage location of the seventh function to a seventh location, and adjust a storage location of the eighth function to an eighth location, wherein the seventh location and the eighth location are in the storage area of the computer device, and an address of the seventh location is less than an address of the eighth location.

27. The adjustment apparatus according to any one of claims 16 to 18, wherein the adjustment apparatus further comprises a processing unit; and
the processing unit is configured to generate shadow functions for the third function and the fourth function, wherein the shadow function of the third function is used to record a call action of the third function, the recorded call action of the third function is used for determining the call frequency of the third function and a call order between the third function and another function, the shadow function of the fourth function is used to record a call action of the fourth function, and the recorded call action of the fourth function is used for determining the call frequency of the fourth function and a call order between the fourth function and another function.

28. The adjustment apparatus according to any one of claims 15 to 18, wherein
the prediction unit is further configured to determine a second service scenario after execution of the first service scenario stops;
the adjustment unit is further configured to adjust a storage location of a ninth to-be-adjusted object to a ninth location, and adjust a storage location of a tenth to-be-adjusted object to a tenth location, wherein the ninth to-be-adjusted object and the tenth to-be-adjusted object are respectively a ninth function and a tenth function that are called in the second service scenario, or the ninth to-be-adjusted object and the tenth to-be-adjusted object are respectively a ninth variable and a tenth variable that are called in the second service scenario; and in the second service scenario, a call frequency of the ninth to-be-adjusted object is higher than a call frequency of the tenth to-be-adjusted object, the ninth location and the tenth location are in the storage area of the computer device, an address of the ninth location is less than an address of the tenth location or an access rate of the ninth location is higher than an access rate of the tenth location, the second service scenario is different from the first service scenario, the ninth to-be-adjusted object is different from the first to-be-adjusted object; and the tenth to-be-adjusted object is different from the second to-be-adjusted object; and
the execution unit is further configured to execute the second service scenario.

29. A computer device, comprising a memory, one or more processors, and one or more programs, wherein when the one or more processors execute the one or more programs, the computer device is enabled to implement the method according to any one of claims 1 to 14.

30. A computer-readable storage medium, comprising instructions, wherein when the instructions are run on a computer device, the computer device is enabled to perform the method according to any one of claims 1 to 14.

31. A computer program product, wherein when the computer program product runs on a computer, the computer is enabled to perform the method according to any one of claims 1 to 14.
